# EUROPÄISCHE PATENTSCHRIFT

(11) **EP 3 466 818 B1**
(45) Veröffentlichungstag und Bekanntmachung des Hinweises auf die Patenterteilung: **01.03.2023**
(21) Anmeldenummer: 18198885.8
(22) Anmeldetag: 05.10.2018
(51) Int. Cl.: B65B 3/00, B65B 37/06

(54) **FLUIDZUFÜHRBAUGRUPPE ZUM ENTFERNEN VON GASBLASEN AUS EINEM FLUIDPFAD**
FLUID SUPPLY MODULE FOR REMOVING GAS BUBBLES FROM A FLUID PATH
MODULE D'ALIMENTATION EN FLUIDE DESTINÉ À ÉLIMINER DES BULLES DE GAZ D'UN TRAJET DE FLUIDE

(30) Priorität: 06.10.2017 DE 102017123296
(43) Veröffentlichungstag der Anmeldung: 10.04.2019
(73) Patentinhaber: GRONINGER & CO. GMBH, D-74564 Crailsheim (DE)
(72) Erfinder: Semmler, Egmont, 74564 Crailsheim (DE); Veile, Josef, 73463 Westhausen (DE)
(74) Vertreter: Witte, Weller & Partner Patentanwälte mbB

(56) Entgegenhaltungen:
- WO-A1-2009/100428
- WO-A2-02/064195
- WO-A2-2013/054368

## Beschreibung

Die vorliegende Erfindung betrifft eine Fluidzuführbaugruppe. Des Weiteren betrifft die vorliegende Erfindung eine Abfüllvorrichtung und eine Verpackungsmaschine mit einer solchen Fluidzuführbaugruppe. Des Weiteren betrifft die vorliegende Erfindung ein Verfahren zur Steuerung einer Fluidzuführbaugruppe, insbesondere zum Entfernen von Gasblasen aus einem Fluidpfad.

Verpackungsmaschinen mit Abfüllvorrichtungen werden allgemein dazu verwendet Flüssigkeiten, insbesondere zur pharmazeutischen oder kosmetischen Verwendung, in Behälter abzufüllen und die Behälter im Nachgang zu verschließen. In dem Abfüllprozess ist es möglich, dass Gasblasen auftreten können. Die Gasblasen treten dabei insbesondere in Dosiervorrichtungen und in Pumpen auf, insbesondere durch das Ansaugen von Luft. Des Weiteren können Gasblasen durch Ausgasungen aus der Flüssigkeit innerhalb des Abfüllprozesses entstehen. Des Weiteren führen undichte Stellen an Schläuchen oder an Verbindungsstellen zwischen einzelnen Bauteilen der Abfüllvorrichtung zum Eintreten von Gasen.

Die auftretenden Gasblasen beeinflussen die Genauigkeit des Abfüllprozesses. Insbesondere im pharmazeutischen Bereich ist eine exakte Dosierung der Abfüllmenge jedoch von großer Wichtigkeit.

Es sind Abfüllvorrichtungen bekannt, die sich mit dem Entfernen von Luftblasen aus Abfüllanlagen beschäftigen. Des Weiteren sind Abfüllanlagen bekannt, die versuchen beispielsweise durch ein Nachdosieren den Effekt der Gasblasen zu minimieren und somit auch zu einer genauen Dosierbarkeit der Abfüllmenge zu gelangen.

Beispielsweise zeigt die Druckschrift DE 10 2010 043 160 A1 eine Füllvorrichtung zur Befüllung eines Behältnisses, insbesondere mit einer pharmazeutischen Flüssigkeit, umfassend eine erste Fülleinheit, welche eine Teilbefüllung des Behältnisses ausführt und das Behältnis nur teilweise befüllt, eine zweite Fülleinheit, welche eine Endbefüllung des Behältnisses ausführt und das Behältnis abschließend befüllt, wenigstens eine Waage, welche das leere Behältnis, das teilbefüllte Behältnis und das endbefüllte Behältnis wiegt und eine Steuereinheit, welche mit der ersten Fülleinheit, der zweiten Fülleinheit und der Waage verbunden ist und ausgelegt ist, basierend auf den ermittelten Werten der Wiegevorgänge durch die Waage die erste und zweite Fülleinheit zu steuern.

Des Weiteren zeigt die Druckschrift DE 10 2014 200 250 A1 ein Verfahren zum Konditionieren einer Abfülleinrichtung für flüssige Pharmazeutika in ein Behältnis, wobei die Abfülleinrichtung eine erste Fülleinrichtung zum Abfüllen einer Hauptfüllmenge und eine zweite Fülleinrichtung zum Dosieren einer Nachfüllmenge aus einer Differenz zwischen einer Gesamtfüllmenge und der Hauptmenge und eine erste Wiegeeinrichtung aufweist, wobei vor einer Produktionsphase, in der die Behältnisse mittels beider Fülleinrichtungen befüllt werden, eine Konditionierungsphase stattfindet, in der die Gesamtfüllmenge lediglich durch die zweite Fülleinrichtung in das Behältnis eindosiert wird, und wobei die Konditionierungsphase, insbesondere zum Entfernen von Luftblasen im Produktionsweg der zweiten Fülleinrichtung dient.

Des Weiteren zeigt die Druckschrift WO 2011/130601 A1 eine Ventilanordnung, die insbesondere verwendet wird, um Flüssigkeiten eines Prozessleitungssystems zu steuern.

Des Weiteren zeigt die Druckschrift US 7,403,125 D2 ein System mit einem Fluidpfad mit einer Abfragezone. In der Abfragezone wird das Fluid mit optischen Methoden analysiert, die Stand der Technik sind. Des Weiteren weist das System einen Luftblasensensor und je eine Pumpe am Anfang und am Ende des Fluidpfads auf. Beide Pumpen und der Luftblasensensor sind mit einer Steuereinheit verbunden. Detektiert der Luftblasensensor Luftblasen im Fluidpfad, fügt die Steuereinheit eine vorher bestimmte Reaktion aus. Diese Reaktion kann ein Warnsignal an den Benutzer, ein Markieren der korrupten Daten oder das Verhindern der Datenaufnahme und der Probenentnahme sein, bis die Abfragezone frei von Luftblasen ist.

Des Weiteren zeigt die Druckschrift WO 2007/019568 A2 eine Vorrichtung zur Fluidabgabe, die ausgebildet ist, um eine vorbestimmte Flüssigkeitsmenge abzugeben. Die Vorrichtung besteht aus einem Flüssigkeitsreservoir, um zu dosierende Flüssigkeit vorzuhalten, einer Dosierröhre, um die Flüssigkeit zu dosieren, und einem Aufzugsmechanismus. Das Fluidreservoir erhält die Flüssigkeit von einem Fluidspeicher. Der Dosierschlauch hat einen Dosierauslass und ist mit einem Auslassanschluss des Fluidreservoirs verbunden. Der Aufzugsmechanismus verändert die relative vertikale Lage zwischen dem Dosierauslass und dem Auslassanschluss, so dass die Flüssigkeit dosiert werden kann, wenn der Dosierauslass niedriger ist als der Auslassanschluss und nicht dosiert wird, wenn der Dosierauslass höher ist als der Auslassanschluss.

Des Weiteren zeigt die Druckschrift EP 2 663 771 B1 eine Kolbenpumpe zur Förderung eines Fluids, umfassend wenigstens einen Zylinder mit einem Kolben, der mittels eines Antriebs innerhalb des Zylinders entlang der Längsachse des Zylinders bewegbar ist, wobei jeder Zylinder an einer Stirnseite einen Montageflansch mit wenigstens einer Zylinderöffnung aufweist und sich zylinderseitig zwischen jeden Kolben und einem Montageflansch in eine Kammer mit veränderlichem Volumen bildet, wenn der zugehörige Kolben im Zylinder bewegt wird. Ferner weist die Kolbenpumpe einen Einlassstutzen zur Zuführung und einen Auslassstutzen zur Abführung des Fluids auf.
Des Weiteren betrifft die Druckschrift WO 2013/054368 A2 eine Vorrichtung zur Fraktionierung und Infusion von Radiopharmazeutika, umfassend eine Fraktioniereinheit zur Fraktionierung einer Menge radioaktiver Flüssigkeit, die in einem Mehrfachdosisfläschchen enthalten ist, in eine Anzahl von kalibrierten Dosen, und Mittel zum Übertragen der Dosen von der Fraktioniereinheit an ein Gerät zur Verabreichung derselben an einen Patienten und ferner umfassend eine belüftete Kammer mit kontrollierter Atmosphäre, die die Mittel zur Übertragung der Dosen und der Anschlüsse an eine Leitung zur Verbindung mit dem Verabreichungsgerät enthält.

Des Weiteren betrifft die Druckschrift WO 02/064195 A2 ein System und ein Verfahren, die ein Fluidkommunikationsnetzwerk umfassen, das eine Primingfluid und ein Abfallfluid zu einem Abfallbeutel sendet, wodurch das Vorhandensein von offenen Fluidbehältern in einem Operationsraum oder einem Katheterlabor vermieden wird. Das Fluidkommunikationsnetz ist so aufgebaut und angeordnet, dass ein nahezu automatisiertes Ansaugen und Entfernen von Blasen möglich ist, wodurch die Möglichkeit von durch den Bediener verursachten Einrichtungsfehlern und die für das Einrichten erforderliche Zeit verringert werden. Das Fluidkommunikationsnetz kann zum Anbringen an einem Ballonkatheter zum Aufblasen desselben verwendet werden.

Des Weiteren betrifft die Druckschrift WO 2009/100428 A1 eine Spenderkassette, die mindestens eine zu füllende Produktspendeflasche vorsieht. Die Kassette stellt eine Filtratleitung bereit, die sich zwischen der Abgabeflasche und einer Filtereinheit erstreckt, so dass der Strömungsweg der Filtratleitung und der Abgabeflasche als umweltkontrolliertes oder GMP-konformes Volumen bereitgestellt und erhalten wird. Das resultierende Produkt, das in die Abgabeflasche abgegeben wird, wird somit in einer GMP-konformen Umgebung abgegeben.

Es ist daher eine Aufgabe der vorliegenden Erfindung, eine verbesserte Fluidzuführbaugruppe und ein verbessertes Verfahren zur Steuerung einer Fluidzuführbaugruppe zur Entfernung von Luftblasen aus einem Abfüllprozess bereitzustellen, insbesondere für eine Abfüllvorrichtung einer Verpackungsmaschine.

Gemäß der beanspruchten Erfindung wird eine Fluidzuführbaugruppe mit einer Mehrwegeventileinrichtung vorgeschlagen, wobei die Mehrwegeventileinrichtung zumindest einen Einlass und zumindest einen ersten und einen zweiten Auslass aufweist, wobei die Fluidzuführbaugruppe zumindest einen ersten Fluidpfad zur Zuleitung einer Flüssigkeit von einem Produkttank aufweist, wobei der zumindest eine erste Fluidpfad mit dem zumindest einen Einlass der Mehrwegeventileinrichtung in Fluidverbindung steht, wobei die Fluidzuführbaugruppe einen zweiten Fluidpfad zur Ableitung einer Flüssigkeit zu einer Abfülleinrichtung aufweist, wobei der zweite Fluidpfad mit dem ersten Auslass der Mehrwegeventileinrichtung in Fluidverbindung steht, wobei die Fluidzuführbaugruppe zumindest einen ersten Sensor zum Erkennen von Gasblasen in dem zumindest einen ersten Fluidpfad aufweist, und wobei die Fluidzuführbaugruppe eine Steuereinrichtung zur Steuerung der Mehrwegeventileinrichtung aufweist, wobei die Steuereinrichtung mit dem zumindest einen ersten Sensor gekoppelt ist. Die Fluidzuführbaugruppe weist einen dritten Fluidpfad zur Ausleitung einer Flüssigkeit auf. Der dritte Fluidpfad steht mit dem zweiten Auslass der Mehrwegeventileinrichtung in Fluidverbindung. Die Fluidzuführbaugruppe weist zumindest einen zweiten Sensor zum Erkennen von Gasblasen in dem dritten Fluidpfad auf. Der zumindest eine zweite Sensor ist mit der Steuereinrichtung gekoppelt.

Gemäß der beanspruchten Erfindung wird eine Abfüllvorrichtung mit einer Fluidzuführbaugruppe gemäß dem ersten Aspekt der Erfindung oder einer seiner Ausgestaltungen und mit einer Abfülleinrichtung vorgeschlagen.

Gemäß der beanspruchten Erfindung wird eine Verpackungsmaschine mit einem Produkttank, mit einer Pumpe und mit einer Abfüllvorrichtung gemäß dem zweiten Aspekt der Erfindung oder einer seiner Ausgestaltungen vorgeschlagen.

Gemäß der beanspruchten Erfindung wird ein erstes Verfahren zur Steuerung einer Fluidzuführbaugruppe vorgeschlagen, mit den folgenden Schritten:
- Bereitstellen einer Fluidverbindung zwischen zumindest einem ersten Fluidpfad, der mit einem Produkttank in Fluidverbindung steht, und einem zweiten Fluidpfad, der mit einer Abfülleinrichtung in Fluidverbindung steht, mittels einer Mehrwegeventileinrichtung, die zumindest einen Einlass und zumindest einen ersten und einen zweiten Auslass aufweist, wobei der zumindest eine erste Fluidpfad mit dem zumindest einen Einlass der Mehrwegeventileinrichtung und der zweite Fluidpfad mit dem ersten Auslass der Mehrwegeventileinrichtung in Fluidverbindung stehen, wobei der zweite Auslass der Mehrwegeventileinrichtung mit einem dritten Fluidpfad in Fluidverbindung steht;
- Zuleiten einer Flüssigkeit von dem Produkttank durch den zumindest einen ersten Fluidpfad und den zumindest einen Einlass der Mehrwegeventileinrichtung zu der Mehrwegeventileinrichtung;
- Ableiten der Flüssigkeit von der Mehrwegeventileinrichtung durch den ersten Auslass der Mehrwegeventileinrichtung und den zweiten Fluidpfad zu der Abfülleinrichtung;
- erstes Erkennen von Gasblasen in dem ersten Fluidpfad mittels zumindest eines ersten Sensors, der mit einer Steuereinrichtung gekoppelt ist;
- erstes Ansteuern der Mehrwegeventileinrichtung mittels der Steuereinrichtung zum Bereitstellen einer Fluidverbindung zwischen dem zumindest einen ersten Fluidpfad und dem zumindest einen zweiten Auslass; und
- zweites Ansteuern der Mehrwegeventileinrichtung mittels der Steuereinheit zum Bereitstellen einer Fluidverbindung zwischen dem zumindest einen ersten Fluidpfad und dem zweiten Fluidpfad, wenn innerhalb eines vorbestimmten Zeitintervalls keine Gasblasen erkannt werden,
wobei das Verfahren nach dem Schritt des ersten Ansteuerns einen der folgenden Schritte aufweist:
- Ausleiten der Flüssigkeit von der Mehrwegeventileinrichtung durch den zweiten Auslass der Mehrwegeventileinrichtung und den dritten Fluidpfad in einen Auffangbehälter; oder
- Rückleiten der Flüssigkeit von der Mehrwegeventileinrichtung durch den zweiten Auslass der Mehrwegeventileinrichtung und einen dritten Fluidpfad in den Produkttank,
wobei das Verfahren vor dem Schritt des zweiten Ansteuerns den Schritt aufweist:
- Zweites Erkennen von Gasblasen in dem dritten Fluidpfad mittels zumindest eines zweiten Sensors.

Auf diese Weise wird es möglich, Luftblasen aus der Fluidzuführung zu entfernen, ohne dass ein großer Verlust bzw. viel Ausschuss einer Flüssigkeit, insbesondere einer pharmazeutischen oder kosmetischen Flüssigkeit, entsteht. Insbesondere pharmazeutische und kosmetische Flüssigkeiten sind relativ teuer. Eine Verminderung des Ausschusses an Flüssigkeit geht damit mit einer Verminderung der Kosten einher.

Des Weiteren wird durch die Fluidzuführbaugruppe und das Verfahren zur Steuerung der Fluidzuführbaugruppe eine Möglichkeit bereitgestellt, Luftblasen gezielt aus der Fluidzuführung zu entfernen. Dies macht beispielsweise ein einmaliges Entlüften am Anfang des Abfüllprozesses in einer Konditionierungsphase oder aber das Nachdosieren mittels einer zweiten Abfüllvorrichtung überflüssig.

Auf diese Weise kann das Flüssigkeitsvolumen, das die Gasblase enthält, aus der Fluidzuführbaugruppe herausgeleitet werden. Somit ist auch ein Auffangen der Flüssigkeit außerhalb der Fluidzuführbaugruppe möglich.

Vorzugsweise kann auf diese Weise die Flüssigkeit in dem Auffangbehälter aufgefangen werden und es kommt zu keiner Verschmutzung der Fluidzuführbaugruppe. Insbesondere im pharmazeutischen Bereich gelten hohe Hygienevorschriften. Reinheit und Sauberkeit sollten daher vorzugsweise gewährleistet sein. Auf diese Weise kann der Auffangbehälter an einem beliebigen Ort platziert sein, zu dem der dritte Fluidpfad die Flüssigkeit leitet.

Vorzugsweise geht auf diese Weise die Flüssigkeit, die mit der Gasblase ausgeleitet wird, nicht verloren, sondern wird in den Produkttank rückgeführt. Insbesondere bei pharmazeutischen oder kosmetischen Flüssigkeiten, die sehr teuer sind, kann dies eine Kosteneinsparung bedeuten.

Auf diese Weise kann die Steuereinrichtung die Information erhalten, wann eine Gasblase, die möglicherweise am ersten Sensor detektiert wurde, den zweiten Sensor passiert hat. Damit kann eine präzisere Steuerung der Fluidzuführbaugruppe ermöglicht werden.

Auf diese Weise kann die Steuereinrichtung die Information erhalten, wann eine Gasblase, die möglicherweise am ersten Sensor detektiert wurde, den zweiten Sensor passiert hat. Damit kann eine präzisere Steuerung der Fluidzuführbaugruppe ermöglicht werden. Insbesondere kann diese Information dazu verwendet werden, um das vorbestimmte Zeitintervall zu berechnen.

Gemäß der beanspruchten Erfindung wird ein zweites Verfahren zur Steuerung einer Fluidzuführbaugruppe vorgeschlagen, mit den folgenden Schritten:
- Bereitstellen einer Fluidverbindung zwischen zumindest einem ersten Fluidpfad, der mit einem Produkttank in Fluidverbindung steht, und einem zweiten Fluidpfad, der mit einer Abfülleinrichtung in Fluidverbindung steht, mittels einer Mehrwegeventileinrichtung, die zumindest einen Einlass und zumindest einen ersten und einen zweiten Auslass aufweist, wobei der zumindest eine erste Fluidpfad mit dem zumindest einen Einlass der Mehrwegeventileinrichtung und der zweite Fluidpfad mit dem ersten Auslass der Mehrwegeventileinrichtung in Fluidverbindung stehen;
- Zuleiten einer Flüssigkeit von dem Produkttank durch den zumindest einen ersten Fluidpfad und den zumindest einen Einlass der Mehrwegeventileinrichtung zu der Mehrwegeventileinrichtung;
- Ableiten der Flüssigkeit von der Mehrwegeventileinrichtung durch den ersten Auslass der Mehrwegeventileinrichtung und den zweiten Fluidpfad zu der Abfülleinrichtung;
- erstes Erkennen von Gasblasen in dem ersten Fluidpfad mittels zumindest eines ersten Sensors, der mit einer Steuereinrichtung gekoppelt ist;
- erstes Ansteuern der Mehrwegeventileinrichtung mittels der Steuereinrichtung zum Bereitstellen einer Fluidverbindung zwischen dem zumindest einen ersten Fluidpfad und dem zumindest einen zweiten Auslass; und
- zweites Ansteuern der Mehrwegeventileinrichtung mittels der Steuereinheit zum Bereitstellen einer Fluidverbindung zwischen dem zumindest einen ersten Fluidpfad und dem zweiten Fluidpfad, wenn innerhalb eines vorbestimmten Zeitintervalls keine Gasblasen erkannt werden,
wobei das vorbestimmte Zeitintervall größer ist als ein Zeitwert, der dem Quotienten aus der Gesamtlänge des zumindest einen ersten Fluidpfades und der eingestellten Strömungsgeschwindigkeit der Flüssigkeit in dem zumindest ersten Fluidpfad entspricht.

Auf diese Weise ist ein Zeitintervall gewählt, in dem die Gasblasen den zumindest ersten Fluidpfad durchquert haben und aus dem zweiten Auslass der Mehrwegeventileinrichtung ausgeleitet worden sind.

Gemäß der beanspruchten Erfindung wird ein drittes Verfahren zur Steuerung einer Fluidzuführbaugruppe vorgeschlagen, mit den folgenden Schritten:
- Bereitstellen einer Fluidverbindung zwischen zumindest einem ersten Fluidpfad, der mit einem Produkttank in Fluidverbindung steht, und einem zweiten Fluidpfad, der mit einer Abfülleinrichtung in Fluidverbindung steht, mittels einer Mehrwegeventileinrichtung, die zumindest einen Einlass und zumindest einen ersten und einen zweiten Auslass aufweist, wobei der zumindest eine erste Fluidpfad mit dem zumindest einen Einlass der Mehrwegeventileinrichtung und der zweite Fluidpfad mit dem ersten Auslass der Mehrwegeventileinrichtung in Fluidverbindung stehen;
- Zuleiten einer Flüssigkeit von dem Produkttank durch den zumindest einen ersten Fluidpfad und den zumindest einen Einlass der Mehrwegeventileinrichtung zu der Mehrwegeventileinrichtung;
- Ableiten der Flüssigkeit von der Mehrwegeventileinrichtung durch den ersten Auslass der Mehrwegeventileinrichtung und den zweiten Fluidpfad zu der Abfülleinrichtung;
- erstes Erkennen von Gasblasen in dem ersten Fluidpfad mittels zumindest eines ersten Sensors, der mit einer Steuereinrichtung gekoppelt ist;
- erstes Ansteuern der Mehrwegeventileinrichtung mittels der Steuereinrichtung zum Bereitstellen einer Fluidverbindung zwischen dem zumindest einen ersten Fluidpfad und dem zumindest einen zweiten Auslass; und
- zweites Ansteuern der Mehrwegeventileinrichtung mittels der Steuereinheit zum Bereitstellen einer Fluidverbindung zwischen dem zumindest einen ersten Fluidpfad und dem zweiten Fluidpfad, wenn innerhalb eines vorbestimmten Zeitintervalls keine Gasblasen erkannt werden,
wobei der zumindest eine erste Fluidpfad einen ersten vorderen Abschnitt, einen ersten Detektionsabschnitt und einen ersten hinteren Abschnitt aufweist, wobei der zumindest eine erste Sensor angeordnet ist, um die Gasblasen nur in dem ersten Detektionsabschnitt des zumindest einen ersten Fluidpfads zu erkennen,
wobei das vorbestimmte Zeitintervall größer ist als ein Zeitwert, der dem Quotienten aus der Länge, die eine Addition der Längen des ersten Detektionsabschnitts und des ersten hinteren Abschnitts des zumindest einen ersten Fluidpfads entspricht, und der eingestellten Strömungsgeschwindigkeit der Flüssigkeit in dem zumindest einen ersten Fluidpfad entspricht.

Viele Typen von Sensoren können Gasblasen nur in einem bestimmten, begrenzten Bereich erkennen. Zur Steuerung der Ventileinrichtung und zum Ausleiten der Gasblasen aus dem ersten Fluidpfad ist es von Vorteil, wenn die Anordnung dieses Bereiches innerhalb des ersten Fluidpfades bekannt ist. Damit kann die Position der Gasblasen in dem ersten Fluidpfad zumindest näherungsweise bestimmt werden. Die Steuereinrichtung kann diese Information nun berücksichtigen, um die Ventileinrichtung geeignet anzusteuern, insbesondere kann diese Information verwendet werden, um das vorbestimmte Zeitintervall zu berechnen.

Auf diese Weise wird ebenfalls ein Zeitintervall angegeben, in dem die Luftblasen den ersten Fluidpfad verlassen haben und durch den zweiten Auslass der Mehrwegeventileinrichtung ausgeleitet worden sind.

Die eingangs gestellte Aufgabe wird somit vollkommen gelöst.

In einer Ausgestaltung der Fluidzuführbaugruppe kann vorgesehen sein, dass der zumindest eine erste Sensor ein akustischer, ein optischer oder ein elektronischer Sensor ist.

Insbesondere akustische und elektronische, aber auch optische Sensoren sind geeignet, um Gasblasen in einem Fluidpfad mit hoher Sicherheit zu erkennen. Es ist aber auch denkbar, dass auch anders geartete Sensoren zum Erkennen von Gasblasen in dem ersten Fluidpfad eingesetzt werden können.

In einer weiteren Ausgestaltung der Fluidzuführbaugruppe kann vorgesehen sein, dass der zumindest eine erste Fluidpfad einen ersten vorderen Abschnitt, einen ersten Detektionsabschnitt und einen ersten hinteren Abschnitt aufweist, wobei der zumindest eine erste Sensor angeordnet ist, um die Gasblasen nur in dem ersten Detektionsabschnitt des zumindest einen ersten Fluidpfads zu erkennen.

Viele Typen von Sensoren können Gasblasen nur in einem bestimmten, begrenzten Bereich erkennen. Zur Steuerung der Ventileinrichtung und zum Ausleiten der Gasblasen aus dem ersten Fluidpfad ist es von Vorteil, wenn die Anordnung dieses Bereiches innerhalb des ersten Fluidpfades bekannt ist. Damit kann die Position der Gasblasen in dem ersten Fluidpfad zumindest näherungsweise bestimmt werden. Die Steuereinrichtung kann diese Information nun berücksichtigen, um die Ventileinrichtung geeignet anzusteuern.

Es gibt bereits eine Reihe von kommerziell erhältlichen Sensoren, insbesondere Ultraschallsensoren, elektrische oder optische Sensoren, die mit hoher Genauigkeit arbeiten und individuell an die Abmessungen eines Fluidpfades, insbesondere eines Schlauches oder Rohres, angepasst werden können. Des Weiteren verfügen viele kommerziell erhältliche Sensoren über anwenderspezifisch programmierbare Mikrocontroller.

In einer weiteren Ausgestaltung der Fluidzuführbaugruppe kann vorgesehen sein, dass der zumindest eine erste Fluidpfad und/oder der zweite Fluidpfad jeweils aus Kunststoff, aus einem Metall oder aus einer Metalllegierung gebildet sind.

Die Fluidpfade sind aus diesen Materialien einfach herzustellen. Insbesondere diese Materialien eignen sich für den Einsatz im pharmazeutischen oder kosmetischen Bereich.

In einer weiteren Ausgestaltung der Fluidzuführbaugruppe kann vorgesehen sein, dass der zumindest eine erste Fluidpfad und/oder zweite Fluidpfad als Wegwerfteile gebildet sind.

Ein Wegwerfteil ist im herkömmlichen Sinne ein Bauteil, das so konzipiert ist, dass es nur zur einmaligen Benutzung dient. Bekannte Wegwerfteile sind zum Beispiel Spritzen oder Handschuhe, die häufig auch mit der Bezeichnung "Einweg" versehen werden. Wegwerfteile sind in der Regel kostengünstig gefertigt und finden insbesondere im medizinischen und kosmetischen Bereich ihre Anwendung, weil dort die Reinigungskosten und der Reinigungsaufwand, insbesondere von Abfüllvorrichtungen, oft die Kosten der einzelnen Komponenten übersteigen. Die Reinigung ist insbesondere im pharmazeutischen und kosmetischen Bereich sehr aufwändig, da die Reinheit und Sauberkeit, beispielsweise von Abfüllanlagen von großer Bedeutung ist. Kleinste Rückstände von Flüssigkeiten aus einer vorherigen Benutzung können zu einer Verunreinigung im Abfüllprozess führen. Insbesondere Kunststoff eignet sich zur Herstellung von Wegwerfteilen.

Sind einfach austauschbare Komponenten wie beispielsweise der zumindest eine erste Fluidpfad und/oder der zweite Fluidpfad als Wegwerfteile gebildet, können diese nach der Verwendung ausgetauscht werden. Wegwerfteile sind in der Regel einfach und kostengünstig gefertigt. Damit kann sich insbesondere eine kostengünstigere Betreibung der Fluidzuführbaugruppe ergeben.

In einer weiteren Ausgestaltung der Fluidzuführbaugruppe kann vorgesehen sein, dass die Mehrwegeventileinrichtung aus Kunststoff, aus einem Metall oder einer Metalllegierung gebildet ist.

Wie bereits ausgeführt eignen sich diese Materialien insbesondere zur Verwendung im pharmazeutischen Bereich.

In einer weiteren Ausgestaltung der Fluidzuführbaugruppe kann vorgesehen sein, dass die Mehrwegeventileinrichtung als Wegwerfteil gebildet ist.

Wie bereits ausgeführt können insbesondere im pharmazeutischen oder kosmetischen Bereich die Reinigungskosten und der Reinigungsaufwand einer Abfüllvorrichtung die Kosten der einzelnen Komponenten der Abfüllvorrichtung übersteigen. Denn die Reinigung ist insbesondere im pharmazeutischen und kosmetischen Bereich sehr aufwändig, da die Reinheit und Sauberkeit der Abfüllanlagen gerade dort von großer Bedeutung ist.

Einfach austauschbare Komponenten, wie beispielsweise die Mehrwegeventileinrichtung, können daher als Wegwerfteil ausgebildet sein. Wegwerfteile sind in der Regel einfach und kostengünstig gefertigt. Damit kann sich insbesondere eine kostengünstigere Betreibung der Fluidzuführbaugruppe ergeben.

In einer weiteren Ausgestaltung der Fluidzuführbaugruppe kann vorgesehen sein, dass die Fluidzuführbaugruppe zwei erste Fluidpfade zur Zuleitung einer Flüssigkeit von einem Produkttank aufweist, wobei die zwei ersten Fluidpfade mit jeweils einem Einlass der Mehrwegeventileinrichtung in Fluidverbindung stehen.

Durch die Verwendung von zwei Fluidpfaden kann beispielsweise die Ausfallsicherheit erhöht werden. Fällt einer der beiden Fluidpfade aus, so fördert der andere Fluidpfad die Flüssigkeit weiter.

In einer weiteren Ausgestaltung der Fluidzuführbaugruppe kann vorgesehen sein, dass die Fluidzuführbaugruppe zwei erste Sensoren aufweist.

Auf diese Weise kann es möglich sein, dass, wenn einer der beiden ersten Sensoren eine Gasblase nicht erkennt, der andere erste Sensor im selben Fluidpfad die Gasblase möglicherweise erkennen kann.

Dazu können die beiden ersten Sensoren insbesondere aus verschiedenen Typen gewählt sein, beispielsweise akustische, optische oder elektronische Sensoren. Beispielsweise könnte der eine erste Sensor als akustischer und der andere erste Sensor als elektronischer Sensor ausgebildet sein.

In einer weiteren Ausgestaltung der Fluidzuführbaugruppe kann vorgesehen sein, dass je einer der zwei ersten Sensoren genau einem der zwei ersten Fluidpfade zugeordnet ist, um in dem jeweiligen ersten Fluidpfad Gasblasen zu erkennen.

Auf diese Weise kann es möglich sein, dass erkannt wird, in welchem Fluidpfad sich gerade Gasblasen befinden. Somit könnte dieser eine Fluidpfad gezielt entlüftet werden.

In einer weiteren Ausgestaltung der Fluidzuführbaugruppe kann vorgesehen sein, dass der dritte Fluidpfad aus Kunststoff, einem Metall oder einer Metalllegierung gebildet ist.

Der Fluidpfad ist aus diesen Materialien einfach herzustellen. Insbesondere diese Materialien eignen sich für den Einsatz im pharmazeutischen oder kosmetischen Bereich.

In einer weiteren Ausgestaltung der Fluidzuführbaugruppe kann vorgesehen sein, dass der dritte Fluidpfad als Wegwerfteil gebildet ist.

Wie bereits ausgeführt können insbesondere im pharmazeutischen oder kosmetischen Bereich die Reinigungskosten und der Reinigungsaufwand einer Abfüllvorrichtung die Kosten der einzelnen Komponenten der Abfüllvorrichtung übersteigen. Denn die Reinigung ist insbesondere im pharmazeutischen und kosmetischen Bereich sehr aufwändig, da die Reinheit und Sauberkeit der Abfüllanlagen gerade dort von großer Bedeutung ist.

Einfach austauschbare Komponenten, wie beispielsweise der dritte Fluidpfad, können daher als Wegwerfteil ausgebildet sein. Wegwerfteile sind in der Regel einfach und kostengünstig gefertigt. Damit kann sich insbesondere eine kostengünstigere Betreibung der Fluidzuführbaugruppe ergeben.

In einer weiteren Ausgestaltung der Fluidzuführbaugruppe kann vorgesehen sein, dass der zumindest eine erste Sensor und der zumindest eine zweite Sensor baugleich sind.

Auf diese Weise kann vermieden werden, dass der zweite Sensor eine Gasblase nicht erkennt, die der erste Sensor erkannt hat. Vorzugsweise wird die Fluidzuführbaugruppe so gesteuert, dass die Mehrwegeventileinrichtung mindestens Flüssigkeit so lange ausleitet, bis der zweite Sensor die Gasblase erkennt, um sicher zu stellen, dass die Gasblase aus dem Produktionsweg ausgeleitet worden ist.

In einer weiteren Ausgestaltung der Fluidzuführbaugruppe kann vorgesehen sein, dass der zumindest eine zweite Sensor ein akustischer, ein optischer oder ein elektronischer Sensor ist.

Insbesondere ein akustischer und elektronischer, aber auch optischer Sensor ist geeignet, um Gasblasen in einem Fluidpfad mit hoher Sicherheit zu erkennen. Es ist aber auch denkbar, dass auch anders geartete Sensoren zum Erkennen von Gasblasen in dem dritten Fluidpfad eingesetzt werden können.

In einer weiteren Ausgestaltung der Fluidzuführbaugruppe kann vorgesehen sein, dass der dritte Fluidpfad einen zweiten vorderen Abschnitt, einen zweiten Detektionsabschnitt und einen zweiten hinteren Abschnitt aufweist, wobei der zumindest eine zweite Sensor angeordnet ist, um die Gasblasen nur in dem zweiten Detektionsabschnitt des dritten Fluidpfads zu erkennen.

Viele Typen von Sensoren können Gasblasen nur in einem bestimmten, begrenzten Bereich erkennen. Zur Steuerung der Ventileinrichtung und zum Ausleiten der Gasblasen aus dem dritten Fluidpfad ist es von Vorteil, wenn die Anordnung dieses Bereiches innerhalb des dritten Fluidpfades bekannt ist. Damit kann die Position der Gasblasen in dem dritten Fluidpfad zumindest näherungsweise bestimmt werden. Die Steuereinrichtung kann diese Information berücksichtigen, um die Mehrwegeventileinrichtung geeignet anzusteuern.

In einer weiteren Ausgestaltung der Fluidzuführbaugruppe kann vorgesehen sein, dass der dritte Fluidpfad dazu ausgebildet ist, um die Flüssigkeit in einen Auffangbehälter auszuleiten.

Auf diese Weise kann die Flüssigkeit mit den Gasblasen aufgefangen werden, ohne dass die Fluidzuführbaugruppe verschmutzt wird.

In einer weiteren Ausgestaltung der Fluidzuführbaugruppe kann vorgesehen sein, dass der dritte Fluidpfad dazu ausgebildet ist, um die Flüssigkeit in den Produkttank rückzuleiten.

Auf diese Weise geht die Flüssigkeit, die mit der Gasblase ausgeleitet wird, nicht verloren, sondern wird in den Produkttank rückgeführt. Insbesondere bei pharmazeutischen oder kosmetischen Flüssigkeiten, die sehr teuer sind, kann dies eine Kosteneinsparung bedeuten.

In einer weiteren Ausgestaltung der Fluidzuführbaugruppe kann vorgesehen sein, dass der dritte Fluidpfad eine Entgasungseinrichtung aufweist.

Wird die Flüssigkeit in den Produkttank rückgeleitet, so bietet die Entgasungseinrichtung die Möglichkeit, die Gasblasen aus dem dritten Fluidpfad zu entfernen. Damit können diese nicht wieder in den Abfüllprozess eingeleitet werden.

Eine Entgasungseinrichtung ist eine Einrichtung zum Trennen von Flüssigkeit und Gas. Die Entgasungseinrichtung leitet vorzugsweise Flüssigkeit und Gas getrennt ab. Eine Entgasungseinrichtung weist demnach vorzugsweise einen Einlass und zwei Auslässe auf.

Ein einfaches Beispiel für eine Entgasungseinrichtung ist ein Behälter, der an einem oberen Ende eine erste Öffnung zum Ausleiten von Gas, an einem unteren Ende eine zweite Öffnung zum Ausleiten von Flüssigkeit und an einer Seitenfläche eine dritte Öffnung zum Einleiten von Gas enthaltender Flüssigkeit aufweist. Der Behälter ist so angeordnet, dass sich auf Grund der verschiedenen Dichten von Flüssigkeit und Gas und der Schwerkraft das Gas in einem oberen Bereich des Behälters sammelt und die Flüssigkeit in einem unteren Bereich des Behälters sammelt. Denkbar sind aber auch andere Ausgestaltungen einer Entgasungseinrichtung.

In einer weiteren Ausgestaltung der Fluidzuführbaugruppe kann vorgesehen sein, dass die Fluidzuführbaugruppe zusätzlich zu dem dritten Fluidpfad einen weiteren dritten Fluidpfad aufweist, wobei der dritte Fluidpfad dazu ausgebildet ist, um die Flüssigkeit in einen Auffangbehälter auszuleiten und wobei der weitere dritte Fluidpfad dazu ausgebildet ist, um die Flüssigkeit in den Produkttank rückzuleiten.

Auf diese Weise kann gezielt entschieden werden, ob das Flüssigkeitsvolumen, das eine Gasblase enthält und demnach ausgeleitet werden soll, in einen Auffangbehälter ausgeleitet wird oder in den Produkttank rückgeleitet werden soll. Hat die Gasblase beispielsweise ein Volumen, das den kompletten ersten Fluidpfad oder einen Großteil des ersten Fluidpfads einnimmt, ist damit eine Möglichkeit bereitgestellt, diese Gasblase komplett aus dem Abfüllzyklus herauszuleiten, ohne dass diese zurückgeleitet werden müsste.

In einer weiteren Ausgestaltung der Fluidzuführbaugruppe kann vorgesehen sein, dass der weitere dritte Fluidpfad eine Entgasungseinrichtung aufweist.

Wird die Flüssigkeit in den Produkttank rückgeleitet, so bietet die Entgasungseinrichtung die Möglichkeit, die Gasblasen aus dem weiteren dritten Fluidpfad zu entfernen. Damit können diese nicht wieder in den Abfüllprozess eingeleitet werden.

In einer weiteren Ausgestaltung der Fluidzuführbaugruppe kann vorgesehen sein, dass der Produkttank eine Entgasungseinrichtung aufweist.

Wird die Flüssigkeit in den Produkttank rückgeleitet, so bietet die Entgasungseinrichtung die Möglichkeit, die Gasblasen aus der Flüssigkeit in dem Produkttank zu entfernen. Damit können diese nicht wieder in den Abfüllprozess eingeleitet werden.

Vorzugsweise kann vorgesehen sein, dass der Produkttank so ausgebildet ist, dass er Flüssigkeit und Gas voneinander trennt. Insbesondere könnte sich der Zufluss in den Produkttank in dem Abschnitt des Produkttanks befinden, in dem die Gasschicht angeordnet ist. Der Abfluss aus dem Produkttank könnte sich insbesondere in dem Abschnitt des Produkttanks befinden, in dem die Flüssigkeitsschicht angeordnet ist.

In einer weiteren Ausgestaltung der Fluidzuführbaugruppe kann vorgesehen sein, dass die Fluidzuführbaugruppe zwei zweite Sensoren aufweist.

Auf diese Weise kann es möglich sein, dass, wenn einer der beiden zweiten Sensoren eine Gasblase nicht erkennt, der andere zweite Sensor im selben Fluidpfad die Gasblase möglicherweise erkennen kann.

Dazu können die beiden zweiten Sensoren insbesondere aus verschiedenen Typen gewählt sein, beispielsweise akustische, optische oder elektronische Sensoren. Beispielsweise könnte der eine zweite Sensor als akustischer und der andere zweite Sensor als elektronischer Sensor ausgebildet sein.

In einer weiteren Ausgestaltung der Fluidzuführbaugruppe kann vorgesehen sein, dass der eine der zwei zweiten Sensoren dem dritten Fluidpfad zugeordnet ist, um in dem dritten Fluidpfad Gasblasen zu erkennen und der andere der zwei zweiten Sensoren dem weiteren dritten Fluidpfad zugeordnet ist, um in dem weiteren dritten Fluidpfad Gasblasen zu erkennen.

Auf diese Weise kann es möglich sein, dass erkannt wird, in welchem der dritten Fluidpfade sich gerade Gasblasen befinden. Die Information eignet sich zur gezielten Steuerung der Fluidzuführbaugruppe.

In einer Ausgestaltung der Abfüllvorrichtung kann vorgesehen sein, dass die Abfüllvorrichtung zumindest eine mit dem zweiten Fluidpfad in Verbindung stehende Füllnadel aufweist, um die Flüssigkeit in Behälter, insbesondere Vials oder Spritzen, abzugeben.

Auf diese Weise kann die Flüssigkeit auf geeignete Art und Weise in die Behälter dosiert werden.

In einer weiteren Ausgestaltung der Abfüllvorrichtung kann vorgesehen sein, dass die Abfülleinrichtung mehrere mit dem zweiten Fluidpfad in Fluidverbindung stehende Füllnadeln aufweist, um die Flüssigkeit in Behälter, insbesondere Vials oder Spritzen, abzugeben.

Auf diese Weise können mehrere Behälter gleichzeitig befüllt werden, was die Leistungsfähigkeit der Abfüllvorrichtung deutlich steigert.

In einer Ausgestaltung des Verfahrens zur Steuerung einer Fluidzuführbaugruppe kann vorgesehen sein, dass der zumindest eine erste Fluidpfad einen ersten vorderen Abschnitt, einen ersten Detektionsabschnitt und einen ersten hinteren Abschnitt aufweist, wobei der zumindest eine erste Sensor angeordnet ist, um die Gasblasen nur in dem ersten Detektionsabschnitt des zumindest einen ersten Fluidpfads zu erkennen.

Viele Typen von Sensoren können Gasblasen nur in einem bestimmten, begrenzten Bereich erkennen. Zur Steuerung der Ventileinrichtung und zum Ausleiten der Gasblasen aus dem ersten Fluidpfad ist es von Vorteil, wenn die Anordnung dieses Bereiches innerhalb des ersten Fluidpfades bekannt ist. Damit kann die Position der Gasblasen in dem ersten Fluidpfad zumindest näherungsweise bestimmt werden. Die Steuereinrichtung kann diese Information nun berücksichtigen, um die Ventileinrichtung geeignet anzusteuern, insbesondere kann diese Information verwendet werden, um das vorbestimmte Zeitintervall zu berechnen.

In einer weiteren Ausgestaltung des Verfahrens zur Steuerung der Fluidzuführbaugruppe kann vorgesehen sein, dass in dem Schritt des Rückleitens Gasblasen aus dem dritten Fluidpfad mittels einer in dem dritten Fluidpfad angeordneten Entgasungseinrichtung entnommen werden.

Wird die Flüssigkeit in den Produkttank rückgeleitet, so bietet die Entgasungseinrichtung die Möglichkeit, die Gasblasen aus dem dritten Fluidpfad zu entfernen. Damit können diese nicht wieder in den Abfüllprozess eingeleitet werden.

Vorzugsweise kann vorgesehen sein, dass die Entgasungseinrichtung nicht im dritten Fluidpfad angeordnet ist sondern in oder an dem Produkttank. Insbesondere kann auch der Produkttank als Entgasungseinrichtung ausgebildet sein.

In einer weiteren Ausgestaltung des Verfahrens zur Steuerung der Fluidzuführbaugruppe kann vorgesehen sein, dass der dritte Fluidpfad einen zweiten vorderen Abschnitt, einen zweiten Detektionsabschnitt und einen zweiten hinteren Abschnitt aufweist, wobei der zumindest eine zweite Sensor angeordnet ist, um Gasblasen nur in den zweiten Detektionsabschnitt des dritten Fluidpfads zu erkennen.

Viele Typen von Sensoren können Gasblasen nur in einem bestimmten, begrenzten Bereich erkennen. Zur Steuerung der Ventileinrichtung und zum Ausleiten der Gasblasen aus dem dritten Fluidpfad ist es von Vorteil, wenn die Anordnung dieses Bereiches innerhalb des dritten Fluidpfades bekannt ist. Damit kann die Position der Gasblasen in dem ersten Fluidpfad zumindest näherungsweise bestimmt werden. Die Steuereinrichtung kann diese Information berücksichtigen, um die Mehrwegeventileinrichtung geeignet anzusteuern, insbesondere kann diese Information verwendet werden, um das vorbestimmte Zeitintervall zu berechnen.

In einer weiteren Ausgestaltung des Verfahrens zur Steuerung der Fluidzuführbaugruppe kann vorgesehen sein, dass das vorbestimmte Zeitintervall größer ist als ein Zeitwert, der dem Quotienten aus der Länge, wie einer Addition der Längen des ersten Detektionsabschnitts des zumindest einen ersten Fluidpfads, des ersten hinteren Abschnitts des zumindest einen ersten Fluidpfads, des zweiten vorderen Abschnitts des dritten Fluidpfads und des zweiten Detektionsabschnitts des dritten Fluidpfads entspricht, und der eingestellten Strömungsgeschwindigkeit der Flüssigkeit in dem zumindest einen ersten Fluidpfad entspricht.

Beispielsweise können zwei Gasblasen hintereinander vom ersten Sensor erkannt werden und insbesondere die zweite Gasblase kann vom ersten Sensor erkannt werden, unmittelbar bevor die erste Gasblase vom zweiten Sensor im dritten Fluidpfad erkannt wird. In diesem Fall können sich zwei Gasblasen zwischen dem ersten und dem zweiten Sensor in den Teilabschnitten des ersten und des dritten Fluidpfads befinden. Um nun zu gewährleisten, dass beide Gasblasen ausgeleitet werden, sollte das Zeitintervall insbesondere so gewählt sein, dass auch die zweite Gasblase den zweiten Sensor in diesem Zeitintervall erreichen kann.

Ausführungsformen der Erfindung sind in der Zeichnung dargestellt und werden in der nachfolgenden Beschreibung näher erläutert. Es zeigen:
- Fig. 1: eine Seitenansicht einer ersten Ausführungsform der Fluidzuführbaugruppe, die nicht unter die beanspruchte Erfindung fällt,
- Fig. 2: eine Seitenansicht einer zweiten Ausführungsform einer Fluidzuführbaugruppe, die nicht unter die beanspruchte Erfindung fällt,
- Fig. 3: eine Seitenansicht einer dritten Ausführungsform einer Fluidzuführbaugruppe, die nicht unter die beanspruchte Erfindung fällt,
- Fig. 4: eine Seitenansicht einer vierten Ausführungsform einer Fluidzuführbaugruppe,
- Fig. 5: eine Seitenansicht einer fünften Ausführungsform einer Fluidzuführbaugruppe,
- Fig. 6: eine Seitenansicht einer ersten Ausführungsform einer Abfüllvorrichtung,
- Fig. 7: eine Seitenansicht einer zweiten Ausführungsform einer Abfüllvorrichtung,
- Fig. 8: eine Seitenansicht einer ersten Ausführungsform einer Verpackungsmaschine,
- Fig. 9: eine Seitenansicht einer zweiten Ausführungsform einer Verpackungsmaschine,
- Fig. 10: eine Seitenansicht einer dritten Ausführungsform einer Verpackungsmaschine,
- Fig. 11: eine schematische Ansicht einer ersten Ausführungsform eines Verfahrens,
- Fig. 12: eine schematische Ansicht einer zweiten Ausführungsform eines Verfahrens,
- Fig. 13: eine schematische Ansicht einer dritten Ausführungsform eines Verfahrens,
- Fig. 14: eine schematische Ansicht einer vierten Ausführungsform eines Verfahrens.

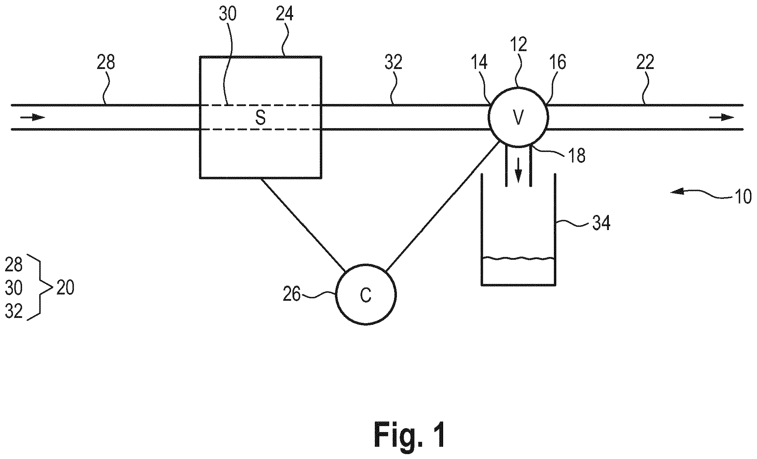

Fig. 1 zeigt eine erste Ausführungsform einer Fluidzuführbaugruppe 10, die nicht unter die beanspruchte Erfindung fällt. Die Fluidzuführ-baugruppe 10 weist eine Mehrwegeventileinrichtung 12, einen ersten Fluidpfad 20 und einen zweiten Fluidpfad 22 auf. Die Mehrwegeventileinrichtung 12 weist einen Einlass 14, einen ersten Auslass 16 und einen zweiten Auslass 18 auf. Der erste Fluidpfad 20 steht mit dem Einlass 14 der Mehrwegeventileinrichtung 12 in Fluidverbindung, um Flüssigkeit aus einem nicht dargestellten Produkttank 58 der Mehrwegeventileinrichtung 12 zuzuleiten. Der zweite Fluidpfad 22 steht mit dem ersten Auslass 16 der Mehrwegeventileinrichtung 12 in Fluidverbindung, um Flüssigkeit aus der Mehrwegeventileinrichtung 12 zu einer nicht dargestellten Abfülleinrichtung 50 abzuleiten. Unterhalb des zweiten Auslasses 18 ist ein Auffangbehälter 34 zum Auffangen von auszuleitender Flüssigkeit angeordnet.

Die Fluidzuführbaugruppe 10 weist des Weiteren einen ersten Sensor 24 auf. Der erste Fluidpfad 20 ist in drei Abschnitte unterteilt, die hintereinander entlang des ersten Fluidpfads in Strömungsrichtung der Flüssigkeit angeordnet sind. Diese sind ein erster vorderer Abschnitt 28, ein erster Detektionsabschnitt 30 und ein erster hinterer Abschnitt 32. Der hintere Abschnitt 32 ist an dem Einlass 14 der Mehrwegeventileinrichtung 12 angeordnet. Der erste Sensor 24 ist angeordnet, um Gasblasen in dem ersten Detektionsabschnitt 30 des ersten Fluidpfads 20 zu erkennen. Der erste Sensor 24 kann dazu insbesondere in dem ersten Detektionsabschnitt 30 oder um den ersten Detektionsabschnitt 30 herum angeordnet sein. Des Weiteren ist es auch möglich, dass der erste Sensor 24 einen Sender und einen Empfänger von akustischen oder elektrischen Signalen aufweist, wobei der Sender auf einer Seite des ersten Fluidpfads 20 angeordnet ist und der Empfänger auf der anderen Seite des ersten Fluidpfads 20 angeordnet ist.

Die Fluidzuführbaugruppe 10 weist des Weiteren eine Steuereinrichtung 26 auf. Die Steuereinrichtung 26 ist dazu ausgebildet, um die Mehrwegeventileinrichtung 12 zu steuern. Der erste Sensor 24 ist mit der Steuereinrichtung 26 gekoppelt. Die Kopplung kann insbesondere darin bestehen, dass der erste Sensor 24 der Steuereinrichtung 26 ein Signal übermittelt, wenn der erste Sensor 24 eine Gasblase erkannt hat. Insbesondere kann der erste Sensor 24 auch dazu ausgebildet sein, die genaue Position der Gasblase innerhalb des ersten Fluidpfads 20 zu ermitteln. Der erste Sensor 24 kann insbesondere dazu ausgebildet sein, die genaue Position der Gasblase an die Steuereinrichtung 26 zu übermitteln.

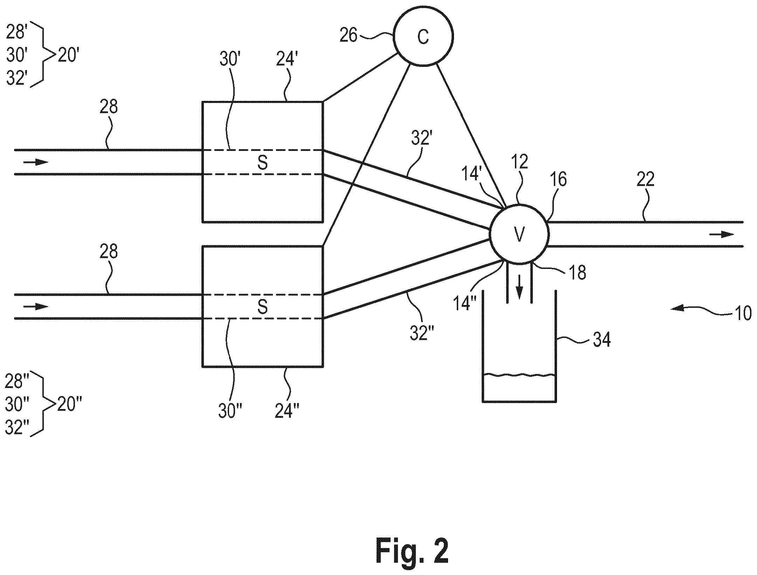

Fig. 2 zeigt eine zweite Ausführungsform einer Fluidzuführbaugruppe 10, die nicht unter die beanspruchte Erfindung fällt. Die Fluidzuführ-baugruppe 10 weist eine Mehrwegeventileinrichtung 12, einen ersten oberen Fluidpfad 20', einen ersten unteren Fluidpfad 20" und einen zweiten Fluidpfad 22 auf. Die Mehrwegeventileinrichtung 12 weist einen ersten Einlass 14', einen zweiten Einlass 14", einen ersten Auslass 16 und einen zweiten Auslass 18 auf. Der obere erste Fluidpfad 20' steht mit dem ersten Einlass 14' in Fluidverbindung, um Flüssigkeit aus einem nicht dargestellten Produkttank 58 der Mehrwegeventileinrichtung 12 zuzuleiten. Der untere erste Fluidpfad 20" steht mit dem zweiten Einlass 14" der Mehrwegeventileinrichtung 12 in Fluidverbindung, um Flüssigkeit aus dem nicht dargestellten Produkttank 58 der Mehrwegeventileinrichtung 12 zuzuleiten. Der zweite Fluidpfad 22 steht mit dem ersten Auslass 16 der Mehrwegeventileinrichtung 12 in Fluidverbindung, um Flüssigkeit aus der Mehrwegeventileinrichtung 12 zu einer nicht dargestellten Abfülleinrichtung 50 abzuleiten. Unter dem zweiten Auslass 18 der Mehrwegeventileinrichtung 12 ist ein Auffangbehälter 34 angeordnet, um aus dem zweiten Auslass 18 ausgeleitete Flüssigkeit aufzufangen.

Der obere und der untere erste Fluidpfad 20', 20" weisen jeweils einen ersten vorderen Abschnitt 28', 28", einen ersten Detektionsabschnitt 30', 30" und einen ersten hinteren Abschnitt 32', 32" auf. Die drei Abschnitte sind hintereinander entlang des jeweiligen ersten Fluidpfads in Strömungsrichtung des Fluids angeordnet. Der erste hintere Abschnitt 32' des oberen ersten Fluidpfads 20' ist an dem ersten Einlass 14' der Mehrwegeventileinrichtung 12 angeordnet. Der ersten hintere Abschnitt 32" des unteren ersten Fluidpfads 20" ist an dem zweiten Einlass 14" der Mehrwegeventileinrichtung 12 angeordnet.

Die Fluidzuführbaugruppe 10 weist des Weiteren einen oberen ersten Sensor 24 und einen unteren ersten Sensor 24" auf. Der obere erste Sensor 24' ist dem oberen ersten Fluidpfad 20' zugeordnet. Der untere erste Sensor 24" ist dem unteren ersten Fluidpfad 20" zugeordnet. Der obere erste Sensor 24' ist so angeordnet, dass er im ersten Detektionsabschnitt 30' des oberen ersten Fluidpfads 20' Gasblasen erkennen kann. Der untere erste Sensor 24" ist so angeordnet, dass er in dem ersten Detektionsabschnitt 30" des unteren ersten Fluidpfads 20" Gasblasen erkennen kann.

Die Fluidzuführbaugruppe 10 weist des Weiteren eine Steuereinrichtung 26 auf. Die Steuereinrichtung 26 ist dazu ausgebildet, die Mehrwegeventileinrichtung 12 zu steuern. Der obere erste Sensor 24' und der untere erste Sensor 24" sind mit der Steuereinrichtung 26 gekoppelt. Die beiden ersten Sensoren 24' und 24" können insbesondere dazu ausgebildet sein, ein Signal an die Steuereinrichtung 26 zu übermitteln, wenn der obere erste Sensor 24' oder der untere erste Sensor 24" eine Gasblase erkannt haben. Die Steuereinrichtung 26 kann insbesondere dazu ausgestaltet sein, nach dem Erkennen einer Gasblase in einem der ersten Fluidpfade 20' und 20" eine Fluidverbindung zwischen beiden ersten Fluidpfaden 20' und 20" und dem zweiten Auslass 18 herzustellen, um die eine Gasblase enthaltende Flüssigkeitsmenge in den Auffangbehälter 34 auszuleiten. Die Steuereinrichtung 26 kann des Weiteren insbesondere dazu ausgebildet sein, eine Fluidverbindung zwischen dem ersten Fluidpfad 20' oder 20", in dem keine Gasblase erkannt wurde, mit dem ersten Auslass 16 einzustellen und gleichzeitig eine Fluidverbindung zwischen dem ersten Fluidpfad 20' oder 20", in dem eine Gasblase erkannt wurde, mit dem zweiten Auslass 18 der Mehrwegeventileinrichtung 12 einzustellen.

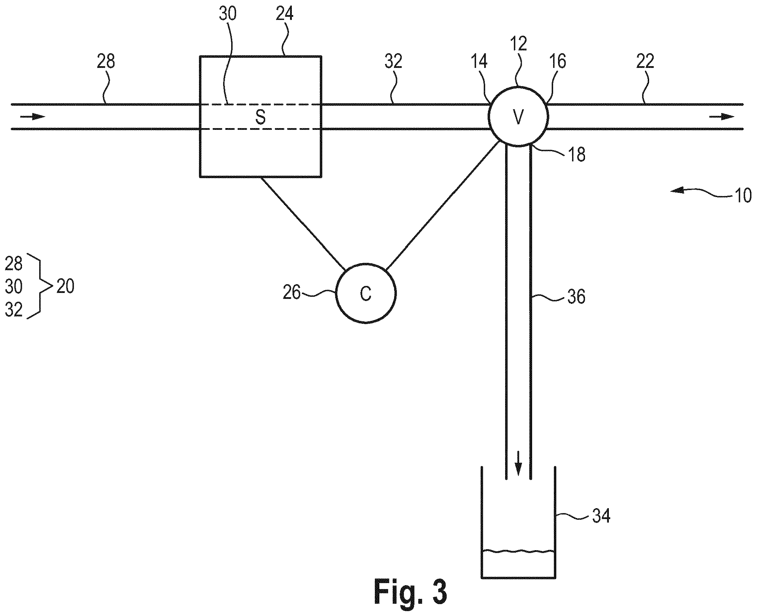

Fig. 3 zeigt eine dritte Ausführungsform einer Fluidzuführbaugruppe 10, die nicht unter die beanspruchte Erfindung fällt. Die Fluidzuführ-baugruppe 10 weist eine Mehrwegeventileinrichtung 12, einen ersten Fluidpfad 20, einen zweiten Fluidpfad 22 und einen dritten Fluidpfad 36 auf. Die Mehrwegeventileinrichtung 12 weist einen Einlass 14, einen ersten Auslass 16 und einen zweiten Auslass 18 auf. Der erste Fluidpfad 20 steht mit dem Einlass 14 der Mehrwegeventileinrichtung 12 in Fluidverbindung, um Flüssigkeit aus einem nicht dargestellten Produkttank 58 der Mehrwegeventileinrichtung 12 zuzuleiten. Der zweite Fluidpfad 22 steht mit dem ersten Auslass 16 der Mehrwegeventileinrichtung 12 in Fluidverbindung, um Flüssigkeit aus der Mehrwegeventileinrichtung 12 zu einer nicht dargestellten Abfülleinrichtung 50 abzuleiten. Der dritte Fluidpfad 36 steht mit dem zweiten Auslass 18 der Mehrwegeventileinrichtung 12 in Fluidverbindung, um eine Flüssigkeit von der Mehrwegeventileinrichtung 12 in einen Auffangbehälter 34 auszuleiten. Der Auffangbehälter 34 ist unterhalb eines offenen Endes des dritten Fluidpfads 36 angeordnet. Insbesondere kann der dritte Fluidpfad 36 in den Auffangbehälter 34 eingeführt sein.

Die Fluidzuführbaugruppe 10 weist des Weiteren einen ersten Sensor 24 auf. Der erste Fluidpfad 20 ist in drei Abschnitte unterteilt, die hintereinander entlang des ersten Fluidpfads in Strömungsrichtung der Flüssigkeit angeordnet sind. Diese sind ein erster vorderer Abschnitt 28, ein erster Detektionsabschnitt 30 und ein erster hinterer Abschnitt 32. Der hintere Abschnitt 32 ist an dem Einlass 14 der Mehrwegeventileinrichtung 12 angeordnet. Der erste Sensor 24 ist angeordnet, um Gasblasen in dem ersten Detektionsabschnitt 30 des ersten Fluidpfads 20 zu erkennen. Der erste Sensor 24 kann dazu insbesondere in dem ersten Detektionsabschnitt 30 oder um den ersten Detektionsabschnitt 30 herum angeordnet sein. Des Weiteren ist es auch möglich, dass der erste Sensor 24 einen Sender und einen Empfänger von akustischen oder elektrischen Signalen aufweist, wobei der Sender auf einer Seite des ersten Fluidpfads 20 angeordnet ist und der Empfänger auf der anderen Seite des ersten Fluidpfads 20 angeordnet ist.

Die Fluidzuführbaugruppe 10 weist des Weiteren eine Steuereinrichtung 26 auf. Die Steuereinrichtung 26 ist dazu ausgebildet, um die Mehrwegeventileinrichtung 12 zu steuern. Der erste Sensor 24 ist mit der Steuereinrichtung 26 gekoppelt. Die Kopplung kann insbesondere darin bestehen, dass der erste Sensor 24 der Steuereinrichtung 26 ein Signal übermittelt, wenn der erste Sensor 24 eine Gasblase erkannt hat. Insbesondere kann der erste Sensor 24 auch dazu ausgebildet sein, die genaue Position der Gasblase innerhalb des ersten Fluidpfads 20 zu ermitteln. Der erste Sensor 24 kann insbesondere dazu ausgebildet sein, die genaue Position der Gasblase an die Steuereinrichtung 26 zu übermitteln.

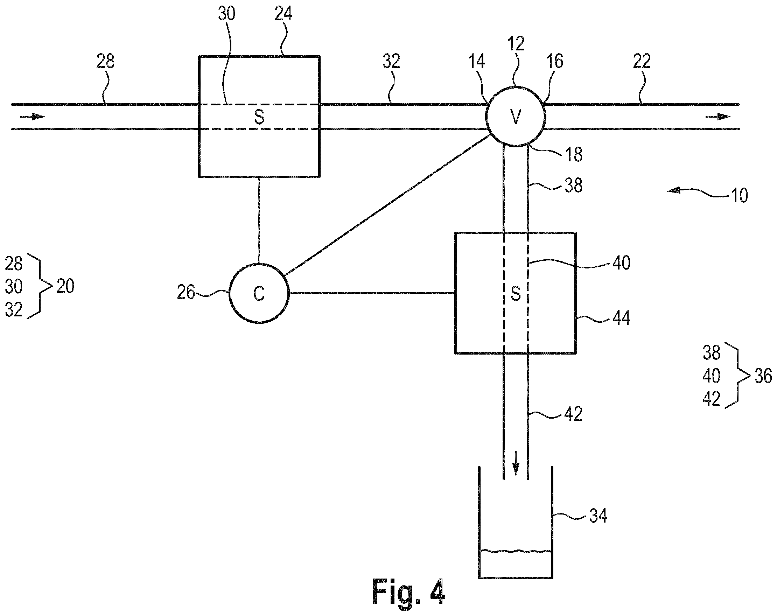

Fig. 4 zeigt eine vierte Ausführungsform einer Fluidzuführbaugruppe 10. Die Fluidzuführbaugruppe 10 weist eine Mehrwegeventileinrichtung 12, einen ersten Fluidpfad 20, einen zweiten Fluidpfad 22 und einen dritten Fluidpfad 36 auf. Die Mehrwegeventileinrichtung 12 weist einen Einlass 14, einen ersten Auslass 16 und einen zweiten Auslass 18 auf. Der erste Fluidpfad 20 steht mit dem Einlass 14 der Mehrwegeventileinrichtung 12 in Fluidverbindung, um Flüssigkeit aus einem nicht dargestellten Produkttank 58 der Mehrwegeventileinrichtung 12 zuzuleiten. Der zweite Fluidpfad 22 steht mit dem ersten Auslass 16 der Mehrwegeventileinrichtung 12 in Fluidverbindung, um Flüssigkeit aus der Mehrwegeventileinrichtung 12 zu einer nicht dargestellten Abfülleinrichtung 50 abzuleiten. Der dritte Fluidpfad 36 steht mit dem zweiten Auslass 18 der Mehrwegeventileinrichtung 12 in Fluidverbindung, um eine Flüssigkeit von der Mehrwegeventileinrichtung 12 in einen Auffangbehälter 34 auszuleiten. Der Auffangbehälter 34 ist unterhalb eines offenen Endes des dritten Fluidpfads 36 angeordnet. Insbesondere kann der dritte Fluidpfad 36 in den Auffangbehälter 34 eingeführt sein.

Die Fluidzuführbaugruppe 10 weist des Weiteren einen ersten Sensor 24 auf. Der erste Fluidpfad 20 ist in drei Abschnitte unterteilt, die hintereinander entlang des ersten Fluidpfads in Strömungsrichtung der Flüssigkeit angeordnet sind. Diese sind ein erster vorderer Abschnitt 28, ein erster Detektionsabschnitt 30 und ein erster hinterer Abschnitt 32. Der hintere Abschnitt 32 ist an dem Einlass 14 der Mehrwegeventileinrichtung 12 angeordnet. Der erste Sensor 24 ist angeordnet, um Gasblasen in dem ersten Detektionsabschnitt 30 des ersten Fluidpfads 20 zu erkennen. Der erste Sensor 24 kann dazu insbesondere in dem ersten Detektionsabschnitt 30 oder um den ersten Detektionsabschnitt 30 herum angeordnet sein. Des Weiteren ist es auch möglich, dass der erste Sensor 24 einen Sender und einen Empfänger von akustischen oder elektrischen Signalen aufweist, wobei der Sender auf einer Seite des ersten Fluidpfads 20 angeordnet ist und der Empfänger auf der anderen Seite des ersten Fluidpfads 20 angeordnet ist.

Die Fluidzuführbaugruppe 10 weist des Weiteren einen zweiten Sensor 44 auf. Der dritte Fluidpfad 36 weist drei Abschnitte auf. Diese sind ein zweiter vorderer Abschnitt 38, ein zweiter Detektionsabschnitt 40 und ein zweiter hinterer Abschnitt 42. Die drei Abschnitte sind hintereinander entlang des dritten Fluidpfads 36 in Strömungsrichtung der Flüssigkeit angeordnet. Der zweite vordere Abschnitt 38 ist an dem zweiten Auslass 18 der Mehrwegeventileinrichtung 12 angeordnet. Der zweite Sensor 44 ist angeordnet, um in dem zweiten Detektionsabschnitt 40 Luftblasen zu erkennen. Der zweite Sensor 30 kann insbesondere in dem zweiten Detektionsabschnitt 40 oder um den zweiten Detektionsabschnitt 40 herum angeordnet sein. Des Weiteren ist es auch möglich, dass der zweite Sensor 44 einen Sender und einen Empfänger von akustischen oder elektrischen Signalen aufweist, wobei der Sender auf einer Seite des dritten Fluidpfads 36 angeordnet ist und der Empfänger auf der anderen Seite des dritten Fluidpfads 36 angeordnet ist.

Die Fluidzuführbaugruppe 10 weist des Weiteren eine Steuereinrichtung 26 auf. Die Steuereinrichtung 26 ist dazu ausgebildet, um die Mehrwegeventileinrichtung 12 zu steuern. Der erste Sensor 24 und der zweite Sensor 44 sind mit der Steuereinrichtung 26 gekoppelt. Die Kopplung kann insbesondere darin bestehen, dass der erste Sensor 24 und/oder der zweite Sensor 44 der Steuereinrichtung 26 ein Signal übermitteln, wenn der erste Sensor 24 und/oder der zweite Sensor 44 eine Gasblase erkannt haben. Insbesondere können der erste Sensor 24 und der zweite Sensor 44 dazu ausgebildet sein, die genaue Position der Gasblase innerhalb des ersten Fluidpfads 20 und/oder des dritten Fluidpfads 36 zu ermitteln. Der Sensor erste 24 und der zweite Sensor 44 können insbesondere dazu ausgebildet sein, die genaue Position der Gasblase an die Steuereinrichtung 26 zu übermitteln.

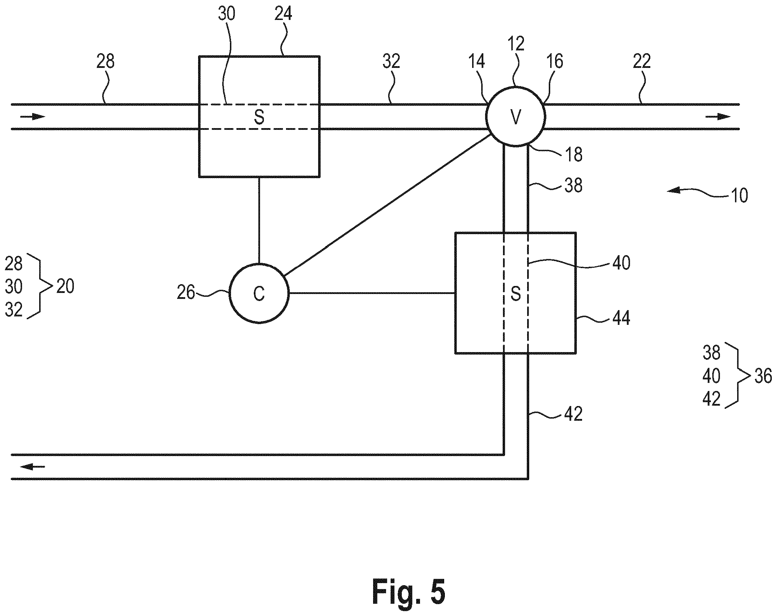

Fig. 5 zeigt eine fünfte Ausführungsform einer Fluidzuführbaugruppe 10. Die Fluidzuführbaugruppe 10 weist eine Mehrwegeventileinrichtung 12, einen ersten Fluidpfad 20, einen zweiten Fluidpfad 22 und einen dritten Fluidpfad 36 auf. Die Mehrwegeventileinrichtung 12 weist einen Einlass 14, einen ersten Auslass 16 und einen zweiten Auslass 18 auf. Der erste Fluidpfad 20 steht mit dem Einlass 14 der Mehrwegeventileinrichtung 12 in Fluidverbindung, um eine Flüssigkeit von einem nicht dargestellten Produkttank 58 der Mehrwegeventileinrichtung 12 zuzuleiten. Der zweite Fluidpfad 22 steht mit dem ersten Auslass 16 der Mehrwegeventileinrichtung 12 in Fluidverbindung, um eine Flüssigkeit von der Mehrwegeventileinrichtung 12 zu einer nicht dargestellten Abfülleinrichtung 50 abzuleiten. Der dritte Fluidpfad 36 steht mit dem zweiten Auslass 18 der Mehrwegeventileinrichtung 12 in Fluidverbindung, um die Flüssigkeit von der Mehrwegeventileinrichtung 12 in den nicht dargestellten Produkttank 58 rückzuleiten.

Der erste Fluidpfad 20 weist einen ersten vorderen Abschnitt 28, einen ersten Detektionsabschnitt 30 und einen ersten hinteren Abschnitt 32 auf. Die Abschnitte sind entlang des ersten Fluidpfads 20 in Strömungsrichtung der Flüssigkeit angeordnet. Der erste hintere Abschnitt 32 des ersten Fluidpfads 20 ist an dem Einlass 14 der Mehrwegeventileinrichtung 12 angeordnet. Die Fluidzuführbaugruppe 10 weist des Weiteren einen ersten Sensor 24 auf. Der erste Sensor 24 ist angeordnet, um Gasblasen in dem ersten Detektionsabschnitt 30 des ersten Fluidpfads 20 zu erkennen.

Der dritte Fluidpfad weist einen zweiten vorderen Abschnitt 38, einen zweiten Detektionsabschnitt 40 und einen zweiten hinteren Abschnitt 42 auf. Die Abschnitte sind entlang des dritten Fluidpfads 36 in Strömungsrichtung der Flüssigkeit angeordnet. Der zweite vordere Abschnitt 38 des dritten Fluidpfads 36 ist an dem zweiten Auslass 18 der Mehrwegeventileinrichtung 12 angeordnet. Die Fluidzuführbaugruppe 10 weist des Weiteren einen zweiten Sensor 44 auf. Der zweite Sensor 44 ist angeordnet, um in dem zweiten Detektionsabschnitt 40 des dritten Fluidpfads 36 Gasblasen zu erkennen.

Die Fluidzuführbaugruppe 10 weist des Weiteren eine Steuereinrichtung 26 auf. Die Steuereinrichtung 26 ist dazu ausgebildet, die Mehrwegeventileinrichtung 12 zu steuern. Der erste Sensor 24 und der zweite Sensor 44 sind mit der Steuereinrichtung 26 gekoppelt. Der dritte Fluidpfad kann insbesondere eine nicht dargestellte Entgasungseinrichtung 62 aufweisen, die Gasblasen aus dem dritten Fluidpfad entfernt. Die Entgasungseinrichtung 62 kann dabei insbesondere in dem zweiten hinteren Abschnitt 42 angeordnet sein. Es ist dabei auch insbesondere denkbar, dass die Entgasungseinrichtung 62 in den nicht dargestellten Produkttank 58 integriert ist.

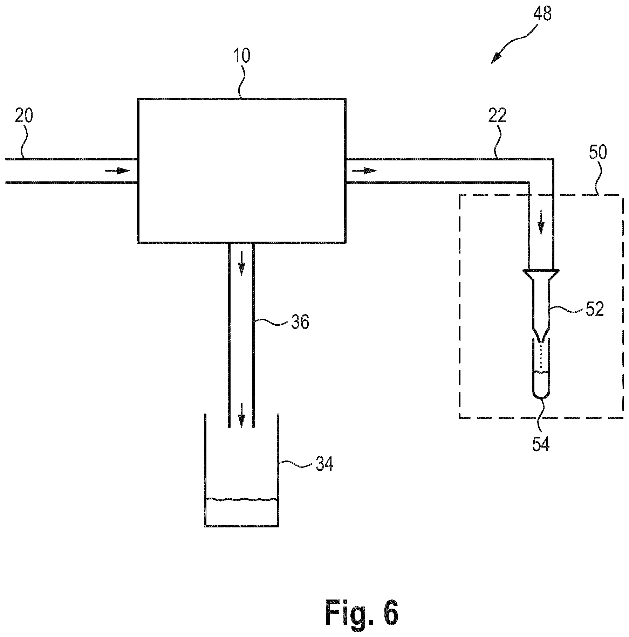

Fig. 6 zeigt eine erste Ausführungsform einer Abfüllvorrichtung 48. Die Abfüllvorrichtung 48 weist eine Fluidzuführbaugruppe 10 und eine Abfülleinrichtung 50 auf. Die Fluidzuführbaugruppe 10 weist einen ersten Fluidpfad 20, einen zweiten Fluidpfad 22 und einen dritten Fluidpfad 36 auf. Der erste Fluidpfad 20 ist dazu ausgebildet, um Flüssigkeit von einem nicht dargestellten Produkttank 58 der Fluidzuführbaugruppe 10 zuzuleiten. Der zweite Fluidpfad 22 ist dazu ausgebildet, um die Flüssigkeit von der Fluidzuführbaugruppe 10 zu der Abfülleinrichtung 50 abzuleiten. Der dritte Fluidpfad 36 ist dazu ausgebildet, um die Flüssigkeit von der Fluidzuführbaugruppe in einen Auffangbehälter 34 auszuleiten. Die Abfülleinrichtung 50 weist eine Füllnadel 52 und einen Behälter 54 auf. Der Behälter kann beispielweise ein Vial oder eine Spritze sein. Der Behälter 54 wird durch die Füllnadel 52 mit der Flüssigkeit befüllt.

Insbesondere kann eine Vielzahl von Behältern 54 nacheinander durch die Füllnadel mit Flüssigkeit befüllt werden. Die Behälter können dazu beispielsweise auf einer Fördertechnik angeordnet sein, die die Behälter 54 der Füllnadel 52 zuführt, um dort gefüllt zu werden. Die Fördertechnik könnte die Behälter 54 auch wieder von der Abfüllvorrichtung 48 wegtransportieren und beispielsweise einer Verschließeinrichtung zuführen, in der die Behälter 54 verschlossen werden.

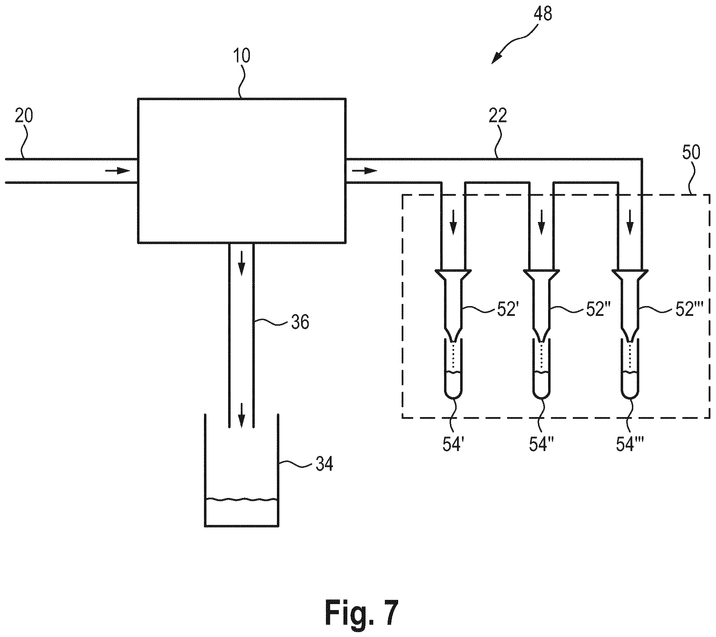

Fig. 7 zeigt eine zweite Ausführungsform einer Abfüllvorrichtung 48. Die Abfüllvorrichtung 48 weist eine Fluidzuführbaugruppe 10 und eine Abfülleinrichtung 50 auf. Die Fluidzuführbaugruppe weist einen ersten Fluidpfad 20, einen zweiten Fluidpfad 22 und einen dritten Fluidpfad 36 auf. Der erste Fluidpfad 20 ist dazu ausgebildet, eine Flüssigkeit von einem nicht dargestellten Produkttank 58 der Fluidzuführbaugruppe 10 zuzuleiten. Der zweite Fluidpfad 22 ist dazu ausgebildet, um die Flüssigkeit von der Fluidzuführbaugruppe 10 in die Abfülleinrichtung 50 abzuleiten. Der dritte Fluidpfad 36 ist dazu ausgebildet, um die Flüssigkeit von der Fluidzuführbaugruppe 10 in einen Auffangbehälter 34 auszuleiten. Die Abfülleinrichtung 50 weist drei Füllnadeln 52', 52" und 52‴ auf. Des Weiteren weist die Abfülleinrichtung 50 drei Behälter 54', 54" und 54‴ auf. Die Behälter 54', 54" und 54‴ sind unter jeweils einer der Füllnadeln 52', 52" und 52‴ angeordnet, um durch die Füllnadeln 52', 52", 52‴ befüllt zu werden.

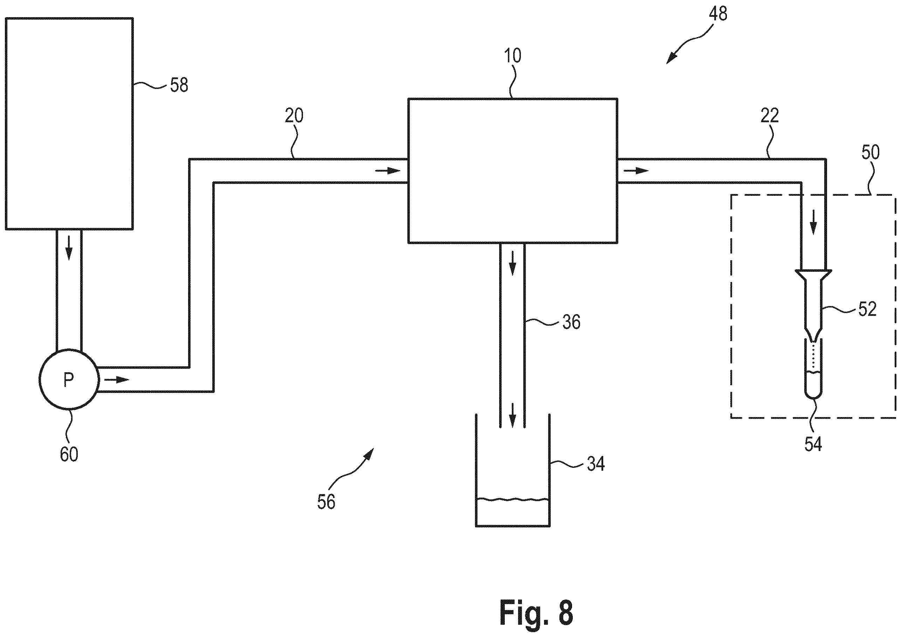

Fig. 8 zeigt eine erste Ausführungsform einer Verpackungsmaschine 56. Die Verpackungsmaschine 56 weist einen Produkttank 58, eine Pumpe 60 und eine Abfüllvorrichtung 48 auf.

Die Abfüllvorrichtung 48 weist eine Fluidzuführbaugruppe 10 und eine Abfülleinrichtung 50 auf. Die Fluidzuführbaugruppe 10 weist einen ersten Fluidpfad 20, einen zweiten Fluidpfad 22 und einen dritten Fluidpfad 36 auf. Der erste Fluidpfad 20 ist dazu ausgebildet, um Flüssigkeit von dem Produkttank 58 der Fluidzuführbaugruppe 10 zuzuleiten. Dazu ist die Pumpe 60 innerhalb des ersten Fluidpfads 20 angeordnet, um die Flüssigkeit aus dem Produkttank 58 zur Fluidzuführbaugruppe 10 zu pumpen. Der zweite Fluidpfad 22 ist dazu ausgebildet, um die Flüssigkeit von der Fluidzuführbaugruppe 10 zu der Abfülleinrichtung 50 abzuleiten. Der dritte Fluidpfad 36 ist dazu ausgebildet, um die Flüssigkeit von der Fluidzuführbaugruppe in einen Auffangbehälter 34 auszuleiten. Die Abfülleinrichtung 50 weist eine Füllnadel 52 und einen Behälter 54 auf. Der Behälter kann beispielweise ein Vial oder eine Spritze sein. Der Behälter 54 wird durch die Füllnadel 52 mit der Flüssigkeit befüllt.

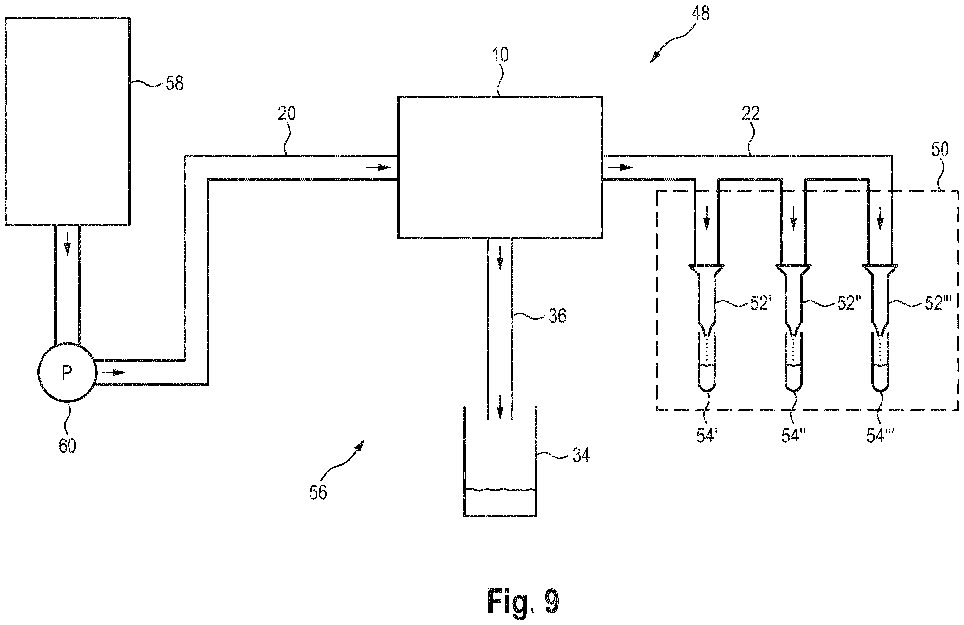

Fig. 9 zeigt eine zweite Ausführungsform einer Verpackungsmaschine 56. Die Verpackungsmaschine 56 weist einen Produkttank 58, eine Pumpe 60 und eine Abfüllvorrichtung 48 auf.

Die Abfüllvorrichtung 48 weist eine Fluidzuführbaugruppe 10 und eine Abfülleinrichtung 50 auf. Die Fluidzuführbaugruppe weist einen ersten Fluidpfad 20, einen zweiten Fluidpfad 22 und einen dritten Fluidpfad 36 auf. Der erste Fluidpfad 20 ist dazu ausgebildet, eine Flüssigkeit von dem Produkttank 58 der Fluidzuführbaugruppe 10 zuzuleiten. Dazu ist die Pumpe 60 innerhalb des ersten Fluidpfads 20 angeordnet, um die Flüssigkeit aus dem Produkttank 58 zur Fluidzuführbaugruppe 10 zu pumpen. Der zweite Fluidpfad 22 ist dazu ausgebildet, um die Flüssigkeit von der Fluidzuführbaugruppe 10 in die Abfülleinrichtung 50 abzuleiten. Der dritte Fluidpfad 36 ist dazu ausgebildet, um die Flüssigkeit von der Fluidzuführbaugruppe 10 in einen Auffangbehälter 34 auszuleiten. Die Abfülleinrichtung 50 weist drei Füllnadeln 52', 52" und 52‴ auf. Des Weiteren weist die Abfülleinrichtung 50 drei Behälter 54', 54" und 54‴ auf. Die Behälter 54', 54" und 54‴ sind unter jeweils einer der Füllnadeln 52', 52" und 52‴ angeordnet, um durch die Füllnadeln 52', 52", 52‴ befüllt zu werden.

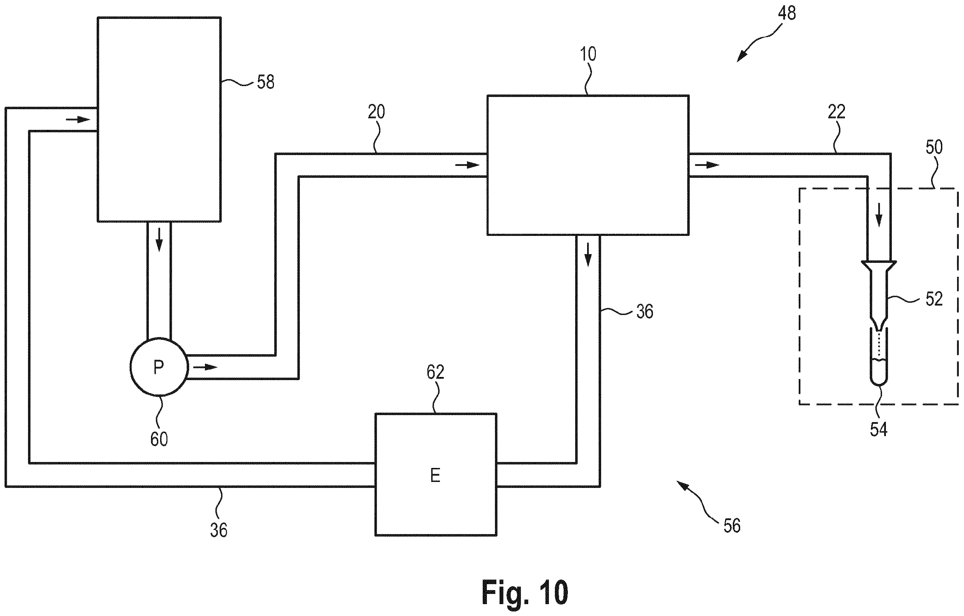

Fig. 10 zeigt eine dritte Ausführungsform einer Verpackungsmaschine 56. Die Verpackungsmaschine 56 weist einen Produkttank 58, eine Pumpe 60 und eine Abfüllvorrichtung 48 auf.

Die Abfüllvorrichtung 48 weist eine Fluidzuführbaugruppe 10 und eine Abfülleinrichtung 50 auf. Die Fluidzuführbaugruppe 10 weist einen ersten Fluidpfad 20, einen zweiten Fluidpfad 22 und einen dritten Fluidpfad 36 auf. Der erste Fluidpfad 20 steht mit dem Produkttank 58 in Fluidverbindung, um Flüssigkeit von dem Produkttank 58 der Fluidzuführbaugruppe 10 zuzuleiten. Die Pumpe 60 ist dazu in dem ersten Fluidpfad 20 angeordnet, um die Flüssigkeit von dem ersten Produkttank 58 zu der Fluidzuführbaugruppe 10 zu pumpen. Der zweite Fluidpfad 22 ist ausgebildet, um die Flüssigkeit von der Fluidzuführbaugruppe 10 zu der Abfülleinrichtung 50 abzuleiten. Die Abfülleinrichtung 50 weist eine Füllnadel 52 und einen Behälter 54 auf. Der Behälter 54 ist unterhalb der Füllnadel 52 angeordnet, um durch die Füllnadel 52 mit Flüssigkeit befüllt zu werden. Die Füllnadel 52 steht in Fluidverbindung mit dem zweien Fluidpfad 22. Der dritte Fluidpfad 36 steht in Fluidverbindung mit dem Produkttank 58. Der dritte Fluidpfad 36 ist ausgebildet, um die Flüssigkeit von der Fluidzuführbaugruppe 10 in den Produkttank 58 rückzuleiten. Der dritte Fluidpfad 36 weist eine Entgasungseinrichtung 62 auf. Die Entgasungseinrichtung 62 ist dazu ausgebildet, Gasblasen aus dem dritten Fluidpfad 36 zu entfernen.

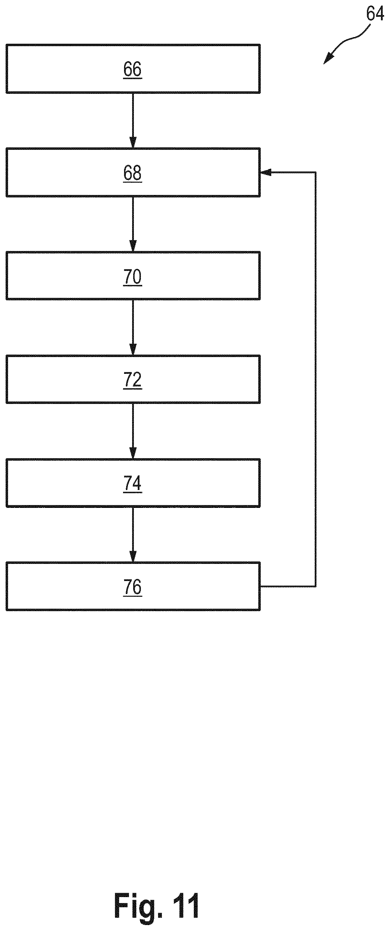

Fig. 11 zeigt eine erste Ausführungsform eines Verfahrens 64 zur Steuerung einer Fluidzuführbaugruppe 10.

Dabei kann zunächst in einem ersten Schritt 66 eine Fluidverbindung zwischen zumindest einem ersten Fluidpfad 20 und einem zweiten Fluidpfad 22 mittels einer Mehrwegeventileinrichtung 12 bereitgestellt werden. Der erste Fluidpfad 20 steht mit einem Produkttank 58 in Fluidverbindung. Der zweite Fluidpfad 22 steht mit einer Abfülleinrichtung 50 in Fluidverbindung. Die Mehrwegeventileinrichtung 12 weist zumindest einen Einlass 14 und zumindest einen ersten und einen zweiten Auslass 16, 18 auf. Dabei steht der zumindest eine erste Fluidpfad 20 mit dem zumindest einen Einlass 14 der Mehrwegeventileinrichtung 12 und der zweite Fluidpfad 22 mit dem ersten Auslass 16 der Mehrwegeventileinrichtung 12 in Fluidverbindung.

In einem weiteren Schritt 68 wird eine Flüssigkeit von dem Produkttank 58 durch den zumindest einen ersten Fluidpfad 20 und den zumindest einen Einlass 14 der Mehrwegeventileinrichtung 12 zu der Mehrwegeventileinrichtung 12 zugeleitet.

In einem weiteren Schritt 70 wird die Flüssigkeit von der Mehrwegeventileinrichtung 12 durch den ersten Auslass 16 der Mehrwegeventileinrichtung 12 und den zweiten Fluidpfad 22 zu der Abfülleinrichtung 50 abgeleitet.

In einem weiteren Schritt 72 werden Gasblasen in dem ersten Fluidpfad 20 mittels zumindest eines ersten Sensors 24 erkannt . Der zumindest eine erste Sensor 24 ist mit einer Steuereinrichtung 26 gekoppelt.

In einem weiteren Schritt 74 wird die Mehrwegeventileinrichtung 12 mittels der Steuereinrichtung 26 angesteuert, um eine Fluidverbindung zwischen dem zumindest einen ersten Fluidpfad 20 und dem zweiten Auslass 18 bereitzustellen, um die Flüssigkeit durch den zweiten Auslass 18 auszuleiten.

In einem weiteren Schritt 76 wird die Mehrwegeventileinrichtung 12 mittels der Steuereinrichtung 26 angesteuert, um eine Fluidverbindung zwischen dem zumindest einen ersten Fluidpfad 20 und dem zweiten Fluidpfad 22 bereitzustellen, wenn innerhalb eines vorbestimmten Zeitintervalls keine Gasblasen erkannt werden.

Das vorbestimmte Zeitintervall kann vorzugsweise größer ist als ein Zeitwert sein, der dem Quotienten aus der Gesamtlänge des zumindest ersten Fluidpfades (20) und der eingestellten Strömungsgeschwindigkeit der Flüssigkeit in dem zumindest ersten Fluidpfad (20) entspricht.

Alternativ kann das vorbestimmte Zeitintervall kann vorzugsweise größer ist als ein Zeitwert sein, der dem Quotienten aus der Länge, die einer Addition der Längen des ersten Detektionsabschnitts (30) und des ersten hinteren Abschnitts (32) des zumindest einen ersten Fluidpfads (20) entspricht, und der eingestellten Strömungsgeschwindigkeit der Flüssigkeit in dem zumindest einen ersten Fluidpfad (20) entspricht.

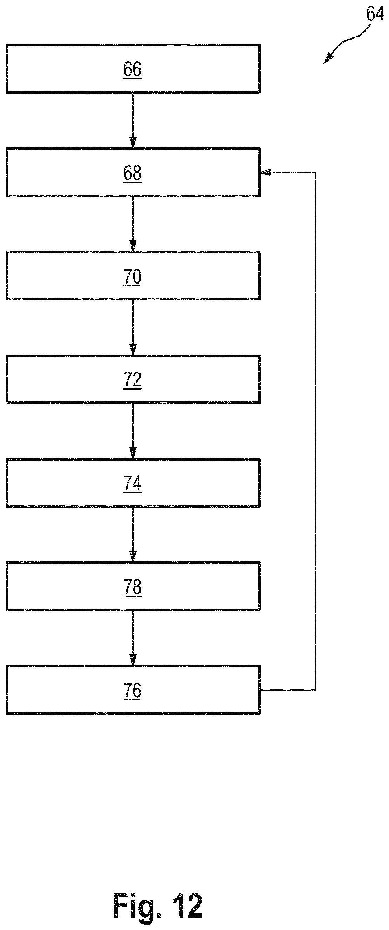

Fig. 12 zeigt eine zweite Ausführungsform eines Verfahrens 64 zur Steuerung einer Fluidzuführbaugruppe 10.

Dabei kann zunächst in einem ersten Schritt 66 eine Fluidverbindung zwischen zumindest einem ersten Fluidpfad 20 und einem zweiten Fluidpfad 22 mittels einer Mehrwegeventileinrichtung 12 bereitgestellt werden. Der erste Fluidpfad 20 steht mit einem Produkttank 58 in Fluidverbindung. Der zweite Fluidpfad 22 steht mit einer Abfülleinrichtung 50 in Fluidverbindung. Die Mehrwegeventileinrichtung 12 weist zumindest einen Einlass 14 und zumindest einen ersten und einen zweiten Auslass 16, 18 auf. Dabei steht der zumindest eine erste Fluidpfad 20 mit dem zumindest einen Einlass 14 der Mehrwegeventileinrichtung 12 und der zweite Fluidpfad 22 mit dem ersten Auslass 16 der Mehrwegeventileinrichtung 12 in Fluidverbindung.

In einem weiteren Schritt 68 wird kann eine Flüssigkeit von dem Produkttank 58 durch den zumindest einen ersten Fluidpfad 20 und den zumindest einen Einlass 14 der Mehrwegeventileinrichtung 12 zu der Mehrwegeventileinrichtung 12 zugeleitet.

In einem weiteren Schritt 70 wird die Flüssigkeit von der Mehrwegeventileinrichtung 12 durch den ersten Auslass 16 der Mehrwegeventileinrichtung 12 und den zweiten Fluidpfad 22 zu der Abfülleinrichtung 50 abgeleitet.

In einem weiteren Schritt 72 werden Gasblasen in dem ersten Fluidpfad 20 mittels zumindest eines ersten Sensors 24 erkannt. Der zumindest eine erste Sensor 24 ist mit einer Steuereinrichtung 26 gekoppelt.

In einem weiteren Schritt 74 wird die Mehrwegeventileinrichtung 12 mittels der Steuereinrichtung 26 angesteuert, um eine Fluidverbindung zwischen dem zumindest einen ersten Fluidpfad 20 und dem zweiten Auslass 18 bereitzustellen, um die Flüssigkeit durch den zweiten Auslass 18 auszuleiten.

In einem weiteren Schritt 78 kann die Flüssigkeit von der Mehrwegeventileinrichtung 12 durch den zweiten Auslass 18 der Mehrwegeventileinrichtung 12 in einen Auffangbehälter 34 ausgeleitet werden. Es kann dabei insbesondere möglich sein, dass die Flüssigkeit durch den zweiten Auslass 18 der Mehrwegeventileinrichtung 12 und einen dritten Fluidpfad 36 in einen Auffangbehälter 34 ausgeleitet wird, wobei der zweite Auslass 18 der Mehrwegeventileinrichtung 12 mit dem dritten Fluidpfad 36 in Fluidverbindung steht.

In einem weiteren Schritt 76 wird die Mehrwegeventileinrichtung 12 mittels der Steuereinrichtung 26 angesteuert, um eine Fluidverbindung zwischen dem zumindest einen ersten Fluidpfad 20 und dem zweiten Fluidpfad 22 bereitzustellen, wenn innerhalb eines vorbestimmten Zeitintervalls keine Gasblasen erkannt werden.

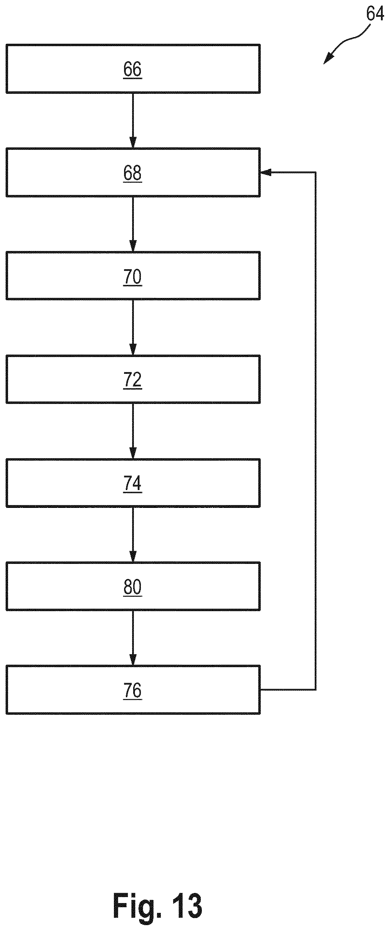

Fig. 13 zeigt eine dritte Ausführungsform eines Verfahrens 64 zur Steuerung einer Fluidzuführbaugruppe 10.

Dabei kann zunächst in einem ersten Schritt 66 eine Fluidverbindung zwischen zumindest einem ersten Fluidpfad 20 und einem zweiten Fluidpfad 22 mittels einer Mehrwegeventileinrichtung 12 bereitgestellt werden. Der erste Fluidpfad 20 steht mit einem Produkttank 58 in Fluidverbindung. Der zweite Fluidpfad 22 steht mit einer Abfülleinrichtung 50 in Fluidverbindung. Die Mehrwegeventileinrichtung 12 weist zumindest einen Einlass 14 und zumindest einen ersten und einen zweiten Auslass 16, 18 auf. Dabei steht der zumindest eine erste Fluidpfad 20 mit dem zumindest einen Einlass 14 der Mehrwegeventileinrichtung 12 und der zweite Fluidpfad 22 mit dem ersten Auslass 16 der Mehrwegeventileinrichtung 12 in Fluidverbindung.

In einem weiteren Schritt 68 wird eine Flüssigkeit von dem Produkttank 58 durch den zumindest einen ersten Fluidpfad 20 und den zumindest einen Einlass 14 der Mehrwegeventileinrichtung 12 zu der Mehrwegeventileinrichtung 12 zugeleitet.

In einem weiteren Schritt 70 kann die Flüssigkeit von der Mehrwegeventileinrichtung 12 durch den ersten Auslass 16 der Mehrwegeventileinrichtung 12 und den zweiten Fluidpfad 22 zu der Abfülleinrichtung 50 abgeleitet werden.

In einem weiteren Schritt 72 werden Gasblasen in dem ersten Fluidpfad 20 mittels zumindest eines ersten Sensors 24 erkannt. Der zumindest eine erste Sensor 24 ist mit einer Steuereinrichtung 26 gekoppelt.

In einem weiteren Schritt 74 wird die Mehrwegeventileinrichtung 12 mittels der Steuereinrichtung 26 angesteuert, um eine Fluidverbindung zwischen dem zumindest einen ersten Fluidpfad 20 und dem zweiten Auslass 18 bereitzustellen, um die Flüssigkeit durch den zweiten Auslass 18 auszuleiten.

In einem weiteren Schritt 80 kann die Flüssigkeit von der Mehrwegeventileinrichtung 12 durch den zweiten Auslass 18 der Mehrwegeventileinrichtung 12 und einen dritten Fluidpfad 36 in den Produkttank 58 rückgeleitet werden. Dabei steht der zweite Auslass 18 der Mehrwegeventileinrichtung 12 mit dem dritten Fluidpfad 36 in Fluidverbindung. Es kann insbesondere vorgesehen sein, dass während des Rückleitens Gasblasen aus dem dritten Fluidpfad 36 mittels einer in dem dritten Fluidpfad 36 angeordneten Entgasungseinrichtung 62 entnommen werden. Dabei ist es auch insbesondere möglich, dass die Entgasungseinrichtung 62 auch in oder an dem Produkttank 58 angeordnet ist. Es kann insbesondere auch vorgesehen sein, dass der Produkttank an sich als Entgasungsvorrichtung verwendet wird.

In einem weiteren Schritt 76 wird die Mehrwegeventileinrichtung 12 mittels der Steuereinrichtung 26 angesteuert, um eine Fluidverbindung zwischen dem zumindest einen ersten Fluidpfad 20 und dem zweiten Fluidpfad 22 bereitzustellen, wenn innerhalb eines vorbestimmten Zeitintervalls keine Gasblasen erkannt werden.

Insbesondere durch das Rückleiten 80 der Flüssigkeit in den Produkttank 58 kann vermieden werden, dass Flüssigkeit durch das Ausleiten verloren geht.

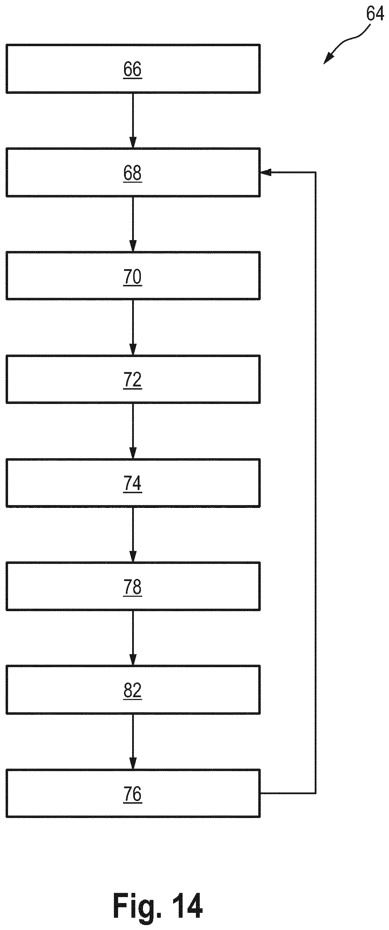

Fig. 14 zeigt eine vierte Ausführungsform eines Verfahrens 64 zum Steuern einer Fluidzuführbaugruppe 10.

Dabei kann zunächst in einem ersten Schritt 66 eine Fluidverbindung zwischen zumindest einem ersten Fluidpfad 20 und einem zweiten Fluidpfad 22 mittels einer Mehrwegeventileinrichtung 12 bereitgestellt werden. Der erste Fluidpfad 20 steht mit einem Produkttank 58 in Fluidverbindung. Der zweite Fluidpfad 22 steht mit einer Abfülleinrichtung 50 in Fluidverbindung. Die Mehrwegeventileinrichtung 12 weist zumindest einen Einlass 14 und zumindest einen ersten und einen zweiten Auslass 16, 18 auf. Dabei steht der zumindest eine erste Fluidpfad 20 mit dem zumindest einen Einlass 14 der Mehrwegeventileinrichtung 12 und der zweite Fluidpfad 22 mit dem ersten Auslass 16 der Mehrwegeventileinrichtung 12 in Fluidverbindung.

In einem weiteren Schritt 68 wird eine Flüssigkeit von dem Produkttank 58 durch den zumindest einen ersten Fluidpfad 20 und den zumindest einen Einlass 14 der Mehrwegeventileinrichtung 12 zu der Mehrwegeventileinrichtung 12 zugeleitet.

In einem weiteren Schritt 70 wird die Flüssigkeit von der Mehrwegeventileinrichtung 12 durch den ersten Auslass 16 der Mehrwegeventileinrichtung 12 und den zweiten Fluidpfad 22 zu der Abfülleinrichtung 50 abgeleitet.

In einem weiteren Schritt 72 werden Gasblasen in dem ersten Fluidpfad 20 mittels zumindest eines ersten Sensors 24 erkannt. Der zumindest eine erste Sensor 24 ist mit einer Steuereinrichtung 26 gekoppelt.

In einem weiteren Schritt 74 wird die Mehrwegeventileinrichtung 12 mittels der Steuereinrichtung 26 angesteuert, um eine Fluidverbindung zwischen dem zumindest einen ersten Fluidpfad 20 und dem zweiten Auslass 18 bereitzustellen, um die Flüssigkeit durch den zweiten Auslass 18 auszuleiten.

In einem weiteren Schritt 78 kann die Flüssigkeit von der Mehrwegeventileinrichtung 12 durch den zweiten Auslass 18 der Mehrwegeventileinrichtung 12 in einen Auffangbehälter 34 ausgeleitet werden. Es kann dabei insbesondere möglich sein, dass die Flüssigkeit durch den zweiten Auslass 18 der Mehrwegeventileinrichtung 12 und einen dritten Fluidpfad 36 in einen Auffangbehälter 34 ausgeleitet wird, wobei der zweite Auslass 18 der Mehrwegeventileinrichtung 12 mit dem dritten Fluidpfad 36 in Fluidverbindung steht.

In einem weiteren Schritt 82 werden Gasblasen in dem dritten Fluidpfad 36 mittels zumindest eines zweiten Sensors 44 erkannt.

In einem weiteren Schritt 76 wird die Mehrwegeventileinrichtung 12 mittels der Steuereinrichtung 26 angesteuert, um eine Fluidverbindung zwischen dem zumindest einen ersten Fluidpfad 20 und dem zweiten Fluidpfad 22 bereitzustellen, wenn innerhalb eines vorbestimmten Zeitintervalls keine Gasblasen erkannt werden.

Vorzugsweise kann das vorbestimmte Zeitintervall größer ist als ein Zeitwert sein, der dem Quotienten aus der Länge, die einer Addition der Längen des ersten Detektionsabschnitts 30 des zumindest einen ersten Fluidpfads 20, des ersten hinteren Abschnitts 32 des zumindest einen ersten Fluidpfads 20, des zweiten vorderen Abschnitts 38 des dritten Fluidpfads 36 und des zweiten Detektionsabschnitts 40 des dritten Fluidpfads 36 entspricht, und der eingestellten Strömungsgeschwindigkeit der Flüssigkeit in dem zumindest einen ersten Fluidpfad 20 entspricht.

## Patentansprüche

1. Fluidzuführbaugruppe (10) mit einer Mehrwegeventileinrichtung (12), die zumindest einen Einlass (14) und zumindest einen ersten und einen zweiten Auslass (16, 18) aufweist, wobei die Fluidzuführbaugruppe (10) zumindest einen ersten Fluidpfad (20) zur Zuleitung einer Flüssigkeit von einem Produkttank (58) aufweist, wobei der zumindest eine erste Fluidpfad (20) mit dem zumindest einen Einlass (14) der Mehrwegeventileinrichtung (12) in Fluidverbindung steht, wobei die Fluidzuführbaugruppe (10) einen zweiten Fluidpfad (22) zur Ableitung einer Flüssigkeit zu einer Abfülleinrichtung (50) aufweist, wobei der zweite Fluidpfad (22) mit dem ersten Auslass (16) der Mehrwegeventileinrichtung (12) in Fluidverbindung steht, wobei die Fluidzuführbaugruppe (10) zumindest einen ersten Sensor (24) zum Erkennen von Gasblasen in dem zumindest einen ersten Fluidpfad (20) aufweist, und wobei die Fluidzuführbaugruppe (10) eine Steuereinrichtung (26) zur Steuerung der Mehrwegeventileinrichtung (12) aufweist, wobei die Steuereinrichtung (26) mit dem zumindest einen ersten Sensor (24) gekoppelt ist, wobei die Fluidzuführbaugruppe (10) einen dritten Fluidpfad (36) zur Ausleitung einer Flüssigkeit aufweist, wobei der dritte Fluidpfad (36) mit dem zweiten Auslass (18) der Mehrwegeventileinrichtung (12) in Fluidverbindung steht, **dadurch gekennzeichnet, dass** die Fluidzuführbaugruppe (10) zumindest einen zweiten Sensor (44) zum Erkennen von Gasblasen in dem dritten Fluidpfad (36) aufweist, wobei der zumindest eine zweite Sensor (44) mit der Steuereinrichtung (26) gekoppelt ist.

2. Fluidzuführbaugruppe nach Anspruch 1, **dadurch gekennzeichnet, dass** der zumindest eine erste Sensor (24) ein akustischer, ein optischer oder ein elektronischer Sensor ist.

3. Fluidzuführbaugruppe nach Anspruch 1 oder 2, **dadurch gekennzeichnet, dass** der zumindest eine erste Fluidpfad (20) einen ersten vorderen Abschnitt (28), einen ersten Detektionsabschnitt (30) und einen ersten hinteren Abschnitt (32) aufweist, wobei der zumindest eine erste Sensor (24) angeordnet ist, um die Gasblasen nur in dem ersten Detektionsabschnitt (30) des zumindest einen ersten Fluidpfads (20) zu erkennen.

4. Fluidzuführbaugruppe nach einem der Ansprüche 1 bis 3, **dadurch gekennzeichnet, dass** die Fluidzuführbaugruppe (10) zwei erste Fluidpfade (20', 20") zur Zuleitung einer Flüssigkeit von einem Produkttank (58) aufweist, wobei die zwei ersten Fluidpfade (20', 20") mit jeweils einem Einlass (14', 14") der Mehrwegeventileinrichtung (12) in Fluidverbindung stehen.

5. Fluidzuführbaugruppe nach einem der Ansprüche 1 bis 4, **dadurch gekennzeichnet, dass** der dritte Fluidpfad (36) einen zweiten vorderen Abschnitt (38), einen zweiten Detektionsabschnitt (40) und einen zweiten hinteren Abschnitt (42) aufweist, wobei der zumindest eine zweite Sensor (44) angeordnet ist, um die Gasblasen nur in dem zweiten Detektionsabschnitt (40) des dritten Fluidpfads (36) zu erkennen.

6. Fluidzuführbaugruppe nach einem der Ansprüche 1 bis 5, **dadurch gekennzeichnet, dass** der dritte Fluidpfad (36) dazu ausgebildet ist, um die Flüssigkeit in einen Auffangbehälter (34) auszuleiten.

7. Fluidzuführbaugruppe nach einem der Ansprüche 1 bis 5, **dadurch gekennzeichnet, dass** der dritte Fluidpfad (36) dazu ausgebildet ist, um die Flüssigkeit in den Produkttank (58) rückzuleiten.

8. Fluidzuführbaugruppe nach einem der Ansprüche 7, **dadurch gekennzeichnet, dass** der dritte Fluidpfad (36) eine Entgasungseinrichtung (62) aufweist.

9. Fluidzuführbaugruppe nach einem der Ansprüche 1 bis 5, **dadurch gekennzeichnet, dass** die Fluidzuführbaugruppe (10) zusätzlich zu dem dritten Fluidpfad (36) einen weiteren dritten Fluidpfad (46) aufweist, wobei der dritte Fluidpfad (36) dazu ausgebildet ist, um die Flüssigkeit in einen Auffangbehälter (34) auszuleiten, und wobei der weitere dritte Fluidpfad (46) dazu ausgebildet ist, um die Flüssigkeit in den Produkttank (58) rückzuleiten.

10. Abfüllvorrichtung (48) mit einer Fluidzuführbaugruppe (10) nach einem der Ansprüche 1 bis 9 und mit einer Abfülleinrichtung (50).

11. Verpackungsmaschine (56) mit einem Produkttankt (58), mit einer Pumpe (60) und mit einer Abfüllvorrichtung (48) nach Anspruch 10, wobei die Pumpe (60) mit dem Produkttank (58) und dem ersten Fluidpfad (20) der Abfüllvorrichtung (48) in Fluidverbindung steht, um Flüssigkeit aus dem Produkttank (58) zur Abfüllvorrichtung (48) zu pumpen.

12. Verfahren (64) zur Steuerung einer Fluidzuführbaugruppe (10), mit den folgenden Schritten:
Bereitstellen (66) einer Fluidverbindung zwischen zumindest einem ersten Fluidpfad (20), der mit einem Produkttank (58) in Fluidverbindung steht, und einem zweiten Fluidpfad (22), der mit einer Abfülleinrichtung (50) in Fluidverbindung steht, mittels einer Mehrwegeventileinrichtung (12), die zumindest einen Einlass (14) und zumindest einen ersten und einen zweiten Auslass (16, 18) aufweist, wobei der zumindest eine erste Fluidpfad (20) mit dem zumindest einen Einlass (14) der Mehrwegeventileinrichtung (12) und der zweite Fluidpfad (22) mit dem ersten Auslass (16) der Mehrwegeventileinrichtung (12) in Fluidverbindung stehen, wobei der zweite Auslass (18) der Mehrwegeventileinrichtung (12) mit einem dritten Fluidpfad (36) in Fluidverbindung steht;
Zuleiten (68) einer Flüssigkeit von dem Produkttank (58) durch den zumindest einen ersten Fluidpfad (20) und den zumindest einen Einlass (14) der Mehrwegeventileinrichtung (12) zu der Mehrwegeventileinrichtung (12);
Ableiten (70) der Flüssigkeit von der Mehrwegeventileinrichtung (12) durch den ersten Auslass (16) der Mehrwegeventileinrichtung (12) und den zweiten Fluidpfad (22) zu der Abfülleinrichtung (50);
Erstes Erkennen (72) von Gasblasen in dem ersten Fluidpfad (20) mittels zumindest eines ersten Sensors (24), der mit einer Steuereinrichtung (26) gekoppelt ist;
Erstes Ansteuern (74) der Mehrwegeventileinrichtung (12) mittels der Steuereinrichtung (26) zum Bereitstellen einer Fluidverbindung zwischen dem zumindest einen ersten Fluidpfad (20) und dem zweiten Auslass (18);
**gekennzeichnet durch** die folgenden Schritte:
Zweites Ansteuern (76) der Mehrwegeventileinrichtung (12) mittels der Steuereinrichtung (26) zum Bereitstellen einer Fluidverbindung zwischen dem zumindest einen ersten Fluidpfad (20) und dem zweiten Fluidpfad (22), wenn innerhalb eines vorbestimmten Zeitintervalls keine Gasblasen erkannt werden,
wobei das Verfahren (64) nach dem Schritt des ersten Ansteuerns (74) einen der folgenden Schritte aufweist:
Ausleiten (78) der Flüssigkeit von der Mehrwegeventileinrichtung (12) durch den zweiten Auslass (18) der Mehrwegeventileinrichtung (12) und den dritten Fluidpfad (36) in einen Auffangbehälter (34); oder
Rückleiten (80) der Flüssigkeit von der Mehrwegeventileinrichtung (12) durch den zweiten Auslass (18) der Mehrwegeventileinrichtung (12) und den dritten Fluidpfad (36) in den Produkttank (58),
wobei das Verfahren (64) vor dem Schritt des zweiten Ansteuerns (76) den Schritt aufweist:
Zweites Erkennen (82) von Gasblasen in dem dritten Fluidpfad (36) mittels zumindest eines zweiten Sensors (44).

13. Verfahren nach Anspruch 12, **dadurch gekennzeichnet, dass** der zumindest eine erste Fluidpfad (20) einen ersten vorderen Abschnitt (28), einen ersten Detektionsabschnitt (30) und einen ersten hinteren Abschnitt (32) aufweist, wobei der zumindest eine erste Sensor (24) angeordnet ist, um die Gasblasen nur in dem ersten Detektionsabschnitt (30) des zumindest einen ersten Fluidpfads (20) zu erkennen.

14. Verfahren (64) zur Steuerung einer Fluidzuführbaugruppe (10), mit den folgenden Schritten:
Bereitstellen (66) einer Fluidverbindung zwischen zumindest einem ersten Fluidpfad (20), der mit einem Produkttank (58) in Fluidverbindung steht, und einem zweiten Fluidpfad (22), der mit einer Abfülleinrichtung (50) in Fluidverbindung steht, mittels einer Mehrwegeventileinrichtung (12), die zumindest einen Einlass (14) und zumindest einen ersten und einen zweiten Auslass (16, 18) aufweist, wobei der zumindest eine erste Fluidpfad (20) mit dem zumindest einen Einlass (14) der Mehrwegeventileinrichtung (12) und der zweite Fluidpfad (22) mit dem ersten Auslass (16) der Mehrwegeventileinrichtung (12) in Fluidverbindung stehen, wobei der zweite Auslass (18) der Mehrwegeventileinrichtung (12) mit einem dritten Fluidpfad (36) in Fluidverbindung steht;
Zuleiten (68) einer Flüssigkeit von dem Produkttank (58) durch den zumindest einen ersten Fluidpfad (20) und den zumindest einen Einlass (14) der Mehrwegeventileinrichtung (12) zu der Mehrwegeventileinrichtung (12);
Ableiten (70) der Flüssigkeit von der Mehrwegeventileinrichtung (12) durch den ersten Auslass (16) der Mehrwegeventileinrichtung (12) und den zweiten Fluidpfad (22) zu der Abfülleinrichtung (50);
Erstes Erkennen (72) von Gasblasen in dem ersten Fluidpfad (20) mittels zumindest eines ersten Sensors (24), der mit einer Steuereinrichtung (26) gekoppelt ist;
Erstes Ansteuern (74) der Mehrwegeventileinrichtung (12) mittels der Steuereinrichtung (26) zum Bereitstellen einer Fluidverbindung zwischen dem zumindest einen ersten Fluidpfad (20) und dem zweiten Auslass (18);
**gekennzeichnet durch** die folgenden Schritte:
Zweites Ansteuern (76) der Mehrwegeventileinrichtung (12) mittels der Steuereinrichtung (26) zum Bereitstellen einer Fluidverbindung zwischen dem zumindest einen ersten Fluidpfad (20) und dem zweiten Fluidpfad (22), wenn innerhalb eines vorbestimmten Zeitintervalls keine Gasblasen erkannt werden,
wobei das vorbestimmte Zeitintervall größer ist als ein Zeitwert, der dem Quotienten aus der Gesamtlänge des zumindest ersten Fluidpfades (20) und der eingestellten Strömungsgeschwindigkeit der Flüssigkeit in dem zumindest ersten Fluidpfad (20) entspricht.

15. Verfahren (64) zur Steuerung einer Fluidzuführbaugruppe (10), mit den folgenden Schritten:
Bereitstellen (66) einer Fluidverbindung zwischen zumindest einem ersten Fluidpfad (20), der mit einem Produkttank (58) in Fluidverbindung steht, und einem zweiten Fluidpfad (22), der mit einer Abfülleinrichtung (50) in Fluidverbindung steht, mittels einer Mehrwegeventileinrichtung (12), die zumindest einen Einlass (14) und zumindest einen ersten und einen zweiten Auslass (16, 18) aufweist, wobei der zumindest eine erste Fluidpfad (20) mit dem zumindest einen Einlass (14) der Mehrwegeventileinrichtung (12) und der zweite Fluidpfad (22) mit dem ersten Auslass (16) der Mehrwegeventileinrichtung (12) in Fluidverbindung stehen, wobei der zweite Auslass (18) der Mehrwegeventileinrichtung (12) mit einem dritten Fluidpfad (36) in Fluidverbindung steht;
Zuleiten (68) einer Flüssigkeit von dem Produkttank (58) durch den zumindest einen ersten Fluidpfad (20) und den zumindest einen Einlass (14) der Mehrwegeventileinrichtung (12) zu der Mehrwegeventileinrichtung (12);
Ableiten (70) der Flüssigkeit von der Mehrwegeventileinrichtung (12) durch den ersten Auslass (16) der Mehrwegeventileinrichtung (12) und den zweiten Fluidpfad (22) zu der Abfülleinrichtung (50);
Erstes Erkennen (72) von Gasblasen in dem ersten Fluidpfad (20) mittels zumindest eines ersten Sensors (24), der mit einer Steuereinrichtung (26) gekoppelt ist;
Erstes Ansteuern (74) der Mehrwegeventileinrichtung (12) mittels der Steuereinrichtung (26) zum Bereitstellen einer Fluidverbindung zwischen dem zumindest einen ersten Fluidpfad (20) und dem zweiten Auslass (18);
**gekennzeichnet durch** die folgenden Schritte:
Zweites Ansteuern (76) der Mehrwegeventileinrichtung (12) mittels der Steuereinrichtung (26) zum Bereitstellen einer Fluidverbindung zwischen dem zumindest einen ersten Fluidpfad (20) und dem zweiten Fluidpfad (22), wenn innerhalb eines vorbestimmten Zeitintervalls keine Gasblasen erkannt werden,
wobei der zumindest eine erste Fluidpfad (20) einen ersten vorderen Abschnitt (28), einen ersten Detektionsabschnitt (30) und einen ersten hinteren Abschnitt (32) aufweist, wobei der zumindest eine erste Sensor (24) angeordnet ist, um die Gasblasen nur in dem ersten Detektionsabschnitt (30) des zumindest einen ersten Fluidpfads (20) zu erkennen,
wobei das vorbestimmte Zeitintervall größer ist als ein Zeitwert, der dem Quotienten aus der Länge, die einer Addition der Längen des ersten Detektionsabschnitts (30) und des ersten hinteren Abschnitts (32) des zumindest einen ersten Fluidpfads (20) entspricht, und der eingestellten Strömungsgeschwindigkeit der Flüssigkeit in dem zumindest einen ersten Fluidpfad (20) entspricht.

## Claims

1. Fluid supply assembly (10) having a multi-way valve device (12) which has at least one inlet (14) and has at least one first and one second outlet (16, 18), wherein the fluid supply assembly (10) has at least one first fluid path (20) for feeding a liquid from a product tank (58), wherein the at least one first fluid path (20) is in fluid connection with the at least one inlet (14) of the multi-way valve device (12), wherein the fluid supply assembly (10) has a second fluid path (22) for conducting away a liquid to a filling device (50), wherein the second fluid path (22) is in fluid connection with the first outlet (16) of the multi-way valve device (12), wherein the fluid supply assembly (10) has at least one first sensor (24) for detecting gas bubbles in the at least one first fluid path (20), and wherein the fluid supply assembly (10) has a control device (26) for controlling the multi-way valve device (12), wherein the control device (26) is coupled to the at least one first sensor (24), wherein the fluid supply assembly (10) has a third fluid path (36) for discharging a liquid, wherein the third fluid path (36) is in fluid connection with the second outlet (18) of the multi-way valve device (12), **characterized in that** the fluid supply assembly (10) has at least one second sensor (44) for detecting gas bubbles in the third fluid path (36), wherein the at least one second sensor (44) is coupled to the control device (26).

2. Fluid supply assembly according to Claim 1, **characterized in that** the at least one first sensor (24) is an acoustic, an optical or an electronic sensor.

3. Fluid supply assembly according to Claim 1 or 2, **characterized in that** the at least one first fluid path (20) has a first front section (28), a first detection section (30) and a first rear section (32), wherein the at least one first sensor (24) is arranged to detect the gas bubbles only in the first detection section (30) of the at least one first fluid path (20).

4. Fluid supply assembly according to one of Claims 1 to 3, **characterized in that** the fluid supply assembly (10) has two first fluid paths (20', 20") for feeding a liquid from a product tank (58), wherein the two first fluid paths (20', 20") are in fluid connection with in each case one inlet (14', 14") of the multi-way valve device (12).

5. Fluid supply assembly according to one of Claims 1 to 4, **characterized in that** the third fluid path (36) has a second front section (38), a second detection section (40) and a second rear section (42), wherein the at least one second sensor (44) is arranged to detect the gas bubbles only in the second detection section (40) of the third fluid path (36).

6. Fluid supply assembly according to one of Claims 1 to 5, **characterized in that** the third fluid path (36) is configured to discharge the liquid into a collecting container (34).

7. Fluid supply assembly according to one of Claims 1 to 5, **characterized in that** the third fluid path (36) is configured to return the liquid into the product tank (58).

8. Fluid supply assembly according to one of Claims 7, **characterized in that** the third fluid path (36) has a degassing device (62).

9. Fluid supply assembly according to one of Claims 1 to 5, **characterized in that**, in addition to the third fluid path (36), the fluid supply assembly (10) has a further third fluid path (46), wherein the third fluid path (36) is configured to discharge the liquid into a collecting container (34), and wherein the further third fluid path (46) is configured to return the liquid into the product tank (58).

10. Filling apparatus (48) having a fluid supply assembly (10) according to one of Claims 1 to 9 and having a filling device (50).

11. Packing machine (56) having a product tank (58), having a pump (60) and having a filling apparatus (48) according to Claim 10, wherein the pump (60) is in fluid connection with the product tank (58) and the first fluid path (20) of the filling apparatus (48) in order to pump liquid from the product tank (58) to the filling apparatus (48).

12. Method (64) for controlling a fluid supply assembly (10), comprising the following steps:
providing (66) a fluid connection between at least one first fluid path (20), which is in fluid connection with a product tank (58), and a second fluid path (22), which is in fluid connection with a filling device (50), by means of a multi-way valve device (12) which has at least one inlet (14) and has at least one first and one second outlet (16, 18), wherein the at least one first fluid path (20) is in fluid connection with the at least one inlet (14) of the multi-way valve device (12) and the second fluid path (22) is in fluid connection with the first outlet (16) of the multi-way valve device (12), wherein the second outlet (18) of the multi-way valve device (12) is in fluid connection with a third fluid path (36);
feeding (68) a liquid from the product tank (58) through the at least one first fluid path (20) and the at least one inlet (14) of the multi-way valve device (12) to the multi-way valve device (12);
conducting away (70) the liquid from the multi-way valve device (12) through the first outlet (16) of the multi-way valve device (12) and the second fluid path (22) to the filling device (50);
firstly detecting (72) gas bubbles in the first fluid path (20) by means of at least one first sensor (24) which is coupled to a control device (26);
firstly controlling (74) the multi-way valve device (12) by means of the control device (26) for providing a fluid connection between the at least one first fluid path (20) and the second outlet (18);
**characterized by** the following steps:
secondly controlling (76) the multi-way valve device (12) by means of the control device (26) for providing a fluid connection between the at least one first fluid path (20) and the second fluid path (22) if no gas bubbles are detected within a predetermined time interval,
wherein the method (64) comprises after the step of first control (74) one of the following steps:
discharging (78) the liquid from the multi-way valve device (12) through the second outlet (18) of the multi-way valve device (12) and the third fluid path (36) into a collecting container (34); or
returning (80) the liquid from the multi-way valve device (12) through the second outlet (18) of the multi-way valve device (12) and the third fluid path (36) into the product tank (58),
wherein the method (64) comprises before the step of second control (76) the step of:
secondly detecting (82) gas bubbles in the third fluid path (36) by means of at least one second sensor (44).

13. Method according to Claim 12, **characterized in that** the at least one first fluid path (20) has a first front section (28), a first detection section (30) and a first rear section (32), wherein the at least one first sensor (24) is arranged to detect the gas bubbles only in the first detection section (30) of the at least one first fluid path (20).

14. Method (64) for controlling a fluid supply assembly (10), comprising the following steps:
providing (66) a fluid connection between at least one first fluid path (20), which is in fluid connection with a product tank (58), and a second fluid path (22), which is in fluid connection with a filling device (50), by means of a multi-way valve device (12) which has at least one inlet (14) and has at least one first and one second outlet (16, 18), wherein the at least one first fluid path (20) is in fluid connection with the at least one inlet (14) of the multi-way valve device (12) and the second fluid path (22) is in fluid connection with the first outlet (16) of the multi-way valve device (12), wherein the second outlet (18) of the multi-way valve device (12) is in fluid connection with a third fluid path (36);
feeding (68) a liquid from the product tank (58) through the at least one first fluid path (20) and the at least one inlet (14) of the multi-way valve device (12) to the multi-way valve device (12);
conducting away (70) the liquid from the multi-way valve device (12) through the first outlet (16) of the multi-way valve device (12) and the second fluid path (22) to the filling device (50);
firstly detecting (72) gas bubbles in the first fluid path (20) by means of at least one first sensor (24) which is coupled to a control device (26);
firstly controlling (74) the multi-way valve device (12) by means of the control device (26) for providing a fluid connection between the at least one first fluid path (20) and the second outlet (18);
**characterized by** the following steps:
secondly controlling (76) the multi-way valve device (12) by means of the control device (26) for providing a fluid connection between the at least one first fluid path (20) and the second fluid path (22) if no gas bubbles are detected within a predetermined time interval,
wherein the predetermined time interval is longer than a time value corresponding to the quotient of the total length of the at least first fluid path (20) and the set flow speed of the liquid in the at least first fluid path (20).

15. Method (64) for controlling a fluid supply assembly (10), comprising the following steps:
providing (66) a fluid connection between at least one first fluid path (20), which is in fluid connection with a product tank (58), and a second fluid path (22), which is in fluid connection with a filling device (50), by means of a multi-way valve device (12) which has at least one inlet (14) and has at least one first and one second outlet (16, 18), wherein the at least one first fluid path (20) is in fluid connection with the at least one inlet (14) of the multi-way valve device (12) and the second fluid path (22) is in fluid connection with the first outlet (16) of the multi-way valve device (12), wherein the second outlet (18) of the multi-way valve device (12) is in fluid connection with a third fluid path (36);
feeding (68) a liquid from the product tank (58) through the at least one first fluid path (20) and the at least one inlet (14) of the multi-way valve device (12) to the multi-way valve device (12);
conducting away (70) the liquid from the multi-way valve device (12) through the first outlet (16) of the multi-way valve device (12) and the second fluid path (22) to the filling device (50);
firstly detecting (72) gas bubbles in the first fluid path (20) by means of at least one first sensor (24) which is coupled to a control device (26);
firstly controlling (74) the multi-way valve device (12) by means of the control device (26) for providing a fluid connection between the at least one first fluid path (20) and the second outlet (18);
**characterized by** the following steps:
secondly controlling (76) the multi-way valve device (12) by means of the control device (26) for providing a fluid connection between the at least one first fluid path (20) and the second fluid path (22) if no gas bubbles are detected within a predetermined time interval,
wherein the at least one first fluid path (20) has a first front section (28), a first detection section (30) and a first rear section (32), wherein the at least one first sensor (24) is arranged to detect the gas bubbles only in the first detection section (30) of the at least one first fluid path (20),
wherein the predetermined time interval is longer than a time value corresponding to the quotient of the length corresponding to an addition of the lengths of the first detection section (30) and the first rear section (32) of the at least one first fluid path (20) and the set flow speed of the liquid in the at least one first fluid path (20).

## Revendications

1. Module d'acheminement de fluide (10) comprenant un dispositif de vanne à voies multiples (12), lequel possède au moins une entrée (14) et au moins une première et une deuxième sortie (16, 18), le module d'acheminement de fluide (10) possédant au moins un premier trajet de fluide (20) destiné à amener un liquide depuis un réservoir à produit (58), l'au moins un premier trajet de fluide (20) se trouvant en liaison fluidique avec l'au moins une entrée (14) du dispositif de vanne à voies multiples (12), le module d'acheminement de fluide (10) possédant un deuxième trajet de fluide (22) destiné à la dérivation d'un liquide vers un dispositif de remplissage (50), le deuxième trajet de fluide (22) se trouvant en liaison fluidique avec la première sortie (16) du dispositif de vanne à voies multiples (12), le module d'acheminement de fluide (10) possédant au moins un premier capteur (24) destiné à reconnaître des bulles de gaz dans l'au moins un premier trajet de fluide (20), et le module d'acheminement de fluide (10) possédant un dispositif de commande (26) destiné à commander le dispositif de vanne à voies multiples (12), le dispositif de commande (26) étant connecté à l'au moins un premier capteur (24), le module d'acheminement de fluide (10) possédant un troisième trajet de fluide (36) destiné à l'évacuation d'un liquide, le troisième trajet de fluide (36) se trouvant en liaison fluidique avec la deuxième sortie (18) du dispositif de vanne à voies multiples (12), **caractérisé en ce que** le module d'acheminement de fluide (10) possède au moins un deuxième capteur (44) destiné à reconnaître des bulles de gaz dans le troisième trajet de fluide (36), l'au moins un deuxième capteur (44) étant connecté au dispositif de commande (26).

2. Module d'acheminement de fluide selon la revendication 1, **caractérisé en ce que** l'au moins un premier capteur (24) est un capteur acoustique, optique ou électronique.

3. Module d'acheminement de fluide selon la revendication 1 ou 2, **caractérisé en ce que** l'au moins un premier trajet de fluide (20) possède une première portion avant (28), une première portion de détection (30) et une première portion arrière (32), l'au moins un premier capteur (24) étant disposé de manière à ne reconnaître les bulles de gaz que dans la première portion de détection (30) de l'au moins un premier trajet de fluide (20).

4. Module d'acheminement de fluide selon l'une des revendications 1 à 3, **caractérisé en ce que** le module d'acheminement de fluide (10) possède deux premiers trajets de fluide (20', 20") destinés à amener un liquide depuis un réservoir à produit (58), les deux premiers trajets de fluide (20', 20") se trouvant en liaison fluidique respectivement avec une entrée (14', 14") du dispositif de vanne à voies multiples (12).

5. Module d'acheminement de fluide selon l'une des revendications 1 à 4, **caractérisé en ce que** le troisième trajet de fluide (36) possède une deuxième portion avant (38), une deuxième portion de détection (40) et une deuxième portion arrière (42), l'au moins un deuxième capteur (44) étant disposé de manière à ne reconnaître les bulles de gaz que dans la deuxième portion de détection (40) du troisième trajet de fluide (36).

6. Module d'acheminement de fluide selon l'une des revendications 1 à 5, **caractérisé en ce que** le troisième trajet de fluide (36) est configuré pour évacuer le liquide dans un récipient collecteur (34).

7. Module d'acheminement de fluide selon l'une des revendications 1 à 5, **caractérisé en ce que** le troisième trajet de fluide (36) est configuré pour renvoyer le liquide dans le réservoir à produit (58).

8. Module d'acheminement de fluide selon l'une quelconque des revendications 7, **caractérisé en ce que** le troisième trajet de fluide (36) possède un dispositif de dégazage (62).

9. Module d'acheminement de fluide selon l'une des revendications 1 à 5, **caractérisé en ce que** le module d'acheminement de fluide (10) possède, en plus du troisième trajet de fluide (36), un troisième trajet de fluide supplémentaire (46), le troisième trajet de fluide (36) étant configuré pour évacuer le liquide dans un récipient collecteur (34) et le troisième trajet de fluide supplémentaire (46) étant configuré pour renvoyer le liquide dans le réservoir à produit (58).

10. Arrangement de remplissage (48) comprenant un module d'acheminement de fluide (10) selon l'une des revendications 1 à 9 et comprenant un dispositif de remplissage (50).

11. Empaqueteuse (56) comprenant un réservoir à produit (58), comprenant une pompe (60) et comprenant un arrangement de remplissage (48) selon la revendication 10, la pompe (60) se trouvant en liaison fluidique avec le réservoir à produit (58) et le premier trajet de fluide (20) de l'arrangement de remplissage (48), afin de pomper du liquide hors du réservoir à produit (58) vers l'arrangement de remplissage (48).

12. Procédé (64) de commande d'un module d'acheminement de fluide (10), comprenant les étapes suivantes :
fourniture (66) d'une liaison fluidique entre au moins un premier trajet de fluide (20), lequel se trouve en liaison fluidique avec un réservoir à produit (58), et un deuxième trajet de fluide (22), lequel se trouve en liaison fluidique avec un dispositif de remplissage (50), au moyen d'un dispositif de vanne à voies multiples (12),
lequel possède au moins une entrée (14) et au moins une première et une deuxième sortie (16, 18), l'au moins un premier trajet de fluide (20) se trouvant en liaison fluidique avec l'au moins une entrée (14) du dispositif de vanne à voies multiples (12) et le deuxième trajet de fluide (22) se trouvant en liaison fluidique avec la première sortie (16) du dispositif de vanne à voies multiples (12), la deuxième sortie (18) du dispositif de vanne à voies multiples (12) se trouvant en liaison fluidique avec un troisième trajet de fluide (36) ;
amenée (68) d'un liquide depuis le réservoir à produit (58) à travers l'au moins un premier trajet de fluide (20) et l'au moins une entrée (14) du dispositif de vanne à voies multiples (12) vers le dispositif de vanne à voies multiples (12) ;
dérivation (70) du liquide depuis le dispositif de vanne à voies multiples (12) à travers la première sortie (16) du dispositif de vanne à voies multiples (12) et le deuxième trajet de fluide (22) vers le dispositif de remplissage (50) ;
première reconnaissance (72) de bulles de gaz dans le premier trajet de fluide (20) au moyen d'au moins un premier capteur (24), lequel est connecté à un dispositif de commande (26) ;
première commande (74) du dispositif de vanne à voies multiples (12) au moyen du dispositif de commande (26) en vue de fournir une liaison fluidique entre l'au moins un premier trajet de fluide (20) et la deuxième sortie (18) ;
**caractérisé par** les étapes suivantes :
deuxième commande (76) du dispositif de vanne à voies multiples (12) au moyen du dispositif de commande (26) en vue de fournir une liaison fluidique entre l'au moins un premier trajet de fluide (20) et le deuxième trajet de fluide (22) si aucune bulle de gaz n'est reconnue pendant un intervalle de temps prédéterminé,
le procédé (64) comprenant l'une des étapes suivantes après l'étape de la première commande (74) ;
évacuation (78) du liquide hors du dispositif de vanne à voies multiples (12) à travers la deuxième sortie (18) du dispositif de vanne à voies multiples (12) et le troisième trajet de fluide (36) dans un récipient collecteur (34) ; ou
renvoi (80) du liquide depuis le dispositif de vanne à voies multiples (12) à travers la deuxième sortie (18) du dispositif de vanne à voies multiples (12) et le troisième trajet de fluide (36) dans le réservoir à produit (58),
le procédé (64) comprenant l'étape suivante avant l'étape de la deuxième commande (76) :
deuxième reconnaissance (82) de bulles de gaz dans le troisième trajet de fluide (36) au moyen d'au moins un deuxième capteur (44).

13. Procédé selon la revendication 12, **caractérisé en ce que** l'au moins un premier trajet de fluide (20) possède une première portion avant (28), une première portion de détection (30) et une première portion arrière (32), l'au moins un premier capteur (24) étant disposé de manière à ne reconnaître les bulles de gaz que dans la première portion de détection (30) de l'au moins un premier trajet de fluide (20).

14. Procédé (64) de commande d'un module d'acheminement de fluide (10), comprenant les étapes suivantes :
fourniture (66) d'une liaison fluidique entre au moins un premier trajet de fluide (20), lequel se trouve en liaison fluidique avec un réservoir à produit (58), et un deuxième trajet de fluide (22), lequel se trouve en liaison fluidique avec un dispositif de remplissage (50), au moyen d'un dispositif de vanne à voies multiples (12), lequel possède au moins une entrée (14) et au moins une première et une deuxième sortie (16, 18), l'au moins un premier trajet de fluide (20) se trouvant en liaison fluidique avec l'au moins une entrée (14) du dispositif de vanne à voies multiples (12) et le deuxième trajet de fluide (22) se trouvant en liaison fluidique avec la première sortie (16) du dispositif de vanne à voies multiples (12), la deuxième sortie (18) du dispositif de vanne à voies multiples (12) se trouvant en liaison fluidique avec un troisième trajet de fluide (36) ;
amenée (68) d'un liquide depuis le réservoir à produit (58) à travers l'au moins un premier trajet de fluide (20) et l'au moins une entrée (14) du dispositif de vanne à voies multiples (12) vers le dispositif de vanne à voies multiples (12) ;
dérivation (70) du liquide depuis le dispositif de vanne à voies multiples (12) à travers la première sortie (16) du dispositif de vanne à voies multiples (12) et le deuxième trajet de fluide (22) vers le dispositif de remplissage (50) ;
première reconnaissance (72) de bulles de gaz dans le premier trajet de fluide (20) au moyen d'au moins un premier capteur (24), lequel est connecté à un dispositif de commande (26) ;
première commande (74) du dispositif de vanne à voies multiples (12) au moyen du dispositif de commande (26) en vue de fournir une liaison fluidique entre l'au moins un premier trajet de fluide (20) et la deuxième sortie (18) ;
**caractérisé par** les étapes suivantes :
deuxième commande (76) du dispositif de vanne à voies multiples (12) au moyen du dispositif de commande (26) en vue de fournir une liaison fluidique entre l'au moins un premier trajet de fluide (20) et le deuxième trajet de fluide (22), si aucune bulle de gaz n'est reconnue pendant un intervalle de temps prédéterminé,
l'intervalle de temps prédéterminé étant supérieur à une valeur de temps qui correspond au quotient de la longueur totale de l'au moins un premier trajet de fluide (20) par la vitesse d'écoulement réglée du liquide dans l'au moins un premier trajet de fluide (20).

15. Procédé (64) de commande d'un module d'acheminement de fluide (10), comprenant les étapes suivantes :
fourniture (66) d'une liaison fluidique entre au moins un premier trajet de fluide (20), lequel se trouve en liaison fluidique avec un réservoir à produit (58), et un deuxième trajet de fluide (22), lequel se trouve en liaison fluidique avec un dispositif de remplissage (50), au moyen d'un dispositif de vanne à voies multiples (12), lequel possède au moins une entrée (14) et au moins une première et une deuxième sortie (16, 18), l'au moins un premier trajet de fluide (20) se trouvant en liaison fluidique avec l'au moins une entrée (14) du dispositif de vanne à voies multiples (12) et le deuxième trajet de fluide (22) se trouvant en liaison fluidique avec la première sortie (16) du dispositif de vanne à voies multiples (12), la deuxième sortie (18) du dispositif de vanne à voies multiples (12) se trouvant en liaison fluidique avec un troisième trajet de fluide (36) ;
amenée (68) d'un liquide depuis le réservoir à produit (58) à travers l'au moins un premier trajet de fluide (20) et l'au moins une entrée (14) du dispositif de vanne à voies multiples (12) vers le dispositif de vanne à voies multiples (12) ;
dérivation (70) du liquide depuis le dispositif de vanne à voies multiples (12) à travers la première sortie (16) du dispositif de vanne à voies multiples (12) et le deuxième trajet de fluide (22) vers le dispositif de remplissage (50) ;
première reconnaissance (72) de bulles de gaz dans le premier trajet de fluide (20) au moyen d'au moins un premier capteur (24), lequel est connecté à un dispositif de commande (26) ;
première commande (74) du dispositif de vanne à voies multiples (12) au moyen du dispositif de commande (26) en vue de fournir une liaison fluidique entre l'au moins un premier trajet de fluide (20) et la deuxième sortie (18) ;
**caractérisé par** les étapes suivantes :
deuxième commande (76) du dispositif de vanne à voies multiples (12) au moyen du dispositif de commande (26) en vue de fournir une liaison fluidique entre l'au moins un premier trajet de fluide (20) et le deuxième trajet de fluide (22), si aucune bulle de gaz n'est reconnue pendant un intervalle de temps prédéterminé,
l'au moins un premier trajet de fluide (20) possédant une première portion avant (28), une première portion de détection (30) et une première portion arrière (32), l'au moins un premier capteur (24) étant disposé de manière à ne reconnaître les bulles de gaz que dans la première portion de détection (30) de l'au moins un premier trajet de fluide (20),
l'intervalle de temps prédéterminé étant supérieur à une valeur de temps qui correspond au quotient de la longueur, laquelle correspond à une addition des longueurs de la première portion de détection (30) et de la première portion arrière (32) de l'au moins un premier trajet de fluide (20), par la vitesse d'écoulement réglée du liquide dans l'au moins un premier trajet de fluide (20).
